(19) Europäisches Patentamt

European Patent Office

Office européen des brevets

(11) **EP 4 782 725 A1**
(12) **EUROPEAN PATENT APPLICATION**
published in accordance with Art. 153(4) EPC

(43) Date of publication:
29.07.2026 Bulletin 2026/31

(21) Application number: 24868207.2

(22) Date of filing: 12.09.2024

(51) International Patent Classification (IPC):
*F16H 61/44* (2006.01)   *F16H 47/04* (2006.01)
*F16H 61/02* (2006.01)   *F16H 61/66* (2006.01)

(52) Cooperative Patent Classification (CPC):
F16H 47/04; F16H 61/02; F16H 61/44; F16H 61/66

(86) International application number:
PCT/JP2024/032750

(87) International publication number:
WO 2025/063130 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 JP 2023151567

(71) Applicant: Hitachi Construction Machinery Co., Ltd.
Tokyo 110-0015 (JP)
(72) Inventors:
• KOINUMA, Takuma
Tsuchiura-shi, Ibaraki 300-0013 (JP)
• SAKAI, Youji
Tsuchiura-shi, Ibaraki 300-0013 (JP)

(74) Representative: MERH-IP Matias Erny Reichl
Hoffmann
Patentanwälte PartG mbB
Paul-Heyse-Straße 29
80336 München (DE)

(54) **TRANSMISSION**

(57) A speed-changing device (21) is provided with an input shaft (22), an output shaft (23), a planetary stepless speed-changing mechanism (24), a multistage speed-changing mechanism (26) and a controller (25). The multistage speed-changing mechanism (26) is provided with a forward rotation mode in which a forward one-speed clutch (69) is connected and a reverse rotation mode in which a backward one-speed clutch (70) is connected. The controller (25) starts the switch from an engagement state to a disengagement state of the forward one-speed clutch (69) and starts the switch from a disengagement state to an engagement state of the backward one-speed clutch (70) when rotation of the output shaft (23) is in a forward rotation state (forward state) at the switching from the forward rotation mode to the reverse rotation mode.

Fig.3

EP 4 782 725 A1

Description

TECHNICAL FIELD

The present invention relates to speed-changing devices that are mounted on vehicles, such as wheel loaders.

BACKGROUND ART

For example, Patent Document 1 describes a construction machine that performs transmission of power by a planetary stepless speed-changing mechanism composed of a combination of a planetary gear mechanism and an electric motor. According to the construction machine of Patent Document 1, the planetary stepless speed-changing mechanism is used to reduce a rapid change in a rotation speed of an engine, thus making it possible to suppress an operating speed of a cargo working machine from rapidly changing.

PRIOR ART DOCUMENT

PATENT DOCUMENT

Patent Document 1: Japanese Patent Laid-Open No. 2008-247269 A (Japanese Patent No. 5095252)

SUMMARY OF THE INVENTION

The technology described in Patent Document 1 has a possibility that the switch of forward rotation and reverse rotation of an output shaft (consequently, the switch of a forward travel and a backward travel of a vehicle) cannot smoothly be performed.
An object of the present invention is to provide a speed-changing device that can smoothly perform the switch of forward rotation and reverse rotation of an output shaft therein (consequently, the switch of a forward travel and a backward travel of a vehicle).
A speed-changing device according to an aspect of the present invention comprises: an input shaft that is rotated by a power source mounted on a vehicle; an output shaft that outputs the rotation to a traveling device in the vehicle; a planetary stepless speed-changing mechanism that is disposed between the input shaft and the output shaft to change the rotation of the input shaft side, which is transmitted to the output shaft side; and a multistage speed-changing mechanism that gradually changes rotation of an output side of the planetary stepless speed-changing mechanism by switching a transmission route of the meshing of gears, wherein the planetary stepless speed-changing mechanism includes: a planetary mechanism including three members of a first member connected to the input shaft side, a second member as the output side and a third member that is an output side different from the second member; a first variator connected to the second member in the planetary mechanism; and a second variator that transmits power between the first variator and the second variator, wherein the multistage speed-changing mechanism includes: a first output clutch disposed in a first output transmission route between the output side of the planetary stepless speed-changing mechanism and the output shaft to switch transmission, and release of power of the first output transmission route, wherein the number of times in the meshing of gears is the odd number of times for the first output transmission route; and a second output clutch disposed in a second output transmission route between the output side of the planetary stepless speed-changing mechanism and the output shaft to switch transmission, and release of power of the second output transmission route, wherein the number of times in the meshing of gears is the zero number of times or the even number of times for the second output transmission route, characterized by including a controller configured to control engagement/disengagement of the first output clutch and engagement/disengagement of the second output clutch, wherein the controller switches a forward rotation mode in which the first output clutch is engaged and the second output clutch is disengaged and a reverse rotation mode in which the first output clutch is disengaged and the second output clutch is engaged, whereby a travel direction of the vehicle is reversed. In addition, the controller, when the rotation of the output shaft is in a forward rotation state at the switching from the forward rotation mode to the reverse rotation mode, starts the switch from an engagement state to a disengagement state of the first output clutch and starts the switch from a disengagement state to an engagement state of the second output clutch, and changes a rotation speed of the first variator, thereby reversing a rotation direction of the third member. Or, the controller, when the rotation of the output shaft is in a reverse rotation state at the switching from the reverse rotation mode to the forward rotation mode, starts the switch from the engagement state to the disengagement state of the second output clutch and starts the switch from the disengagement state to the engagement state of the first output clutch, and changes the rotation speed of the first variator, thereby reversing the rotation direction of the third member.
According to the aspect of the present invention, the switch of the forward rotation and the reverse rotation of the output shaft (consequently, the switch of the forward travel and the backward travel of the vehicle) can smoothly be performed.

**BRIEF DESCRIPTION OF THE DRAWINGS**

Fig. 1 is a left side view showing a wheel loader on which a speed-changing device according to an embodiment of the present invention is mounted.

Fig. 2 is a partially broken side view showing the speed-changing device in Fig. 1.

Fig. 3 is a configuration diagram showing a speed-changing device according to a first embodiment.

Fig. 4 is a configuration diagram showing the speed-changing device in Fig. 3 together with an internal part of a planetary mechanism.

Fig. 5 is an enlarged view showing part (A) in Fig. 4.

Fig. 6 is an enlarged view showing part (B) in Fig. 4.

Fig. 7 is a configuration diagram showing an example in a case where a first variator, a second variator, a power absorption device and the like in a planetary stepless speed-changing mechanism in Fig. 3 are respectively configured of hydraulic equipment.

Fig. 8 is an explanatory diagram showing the planetary mechanism in Fig. 4 as viewed from a power source side.

Fig. 9 is a characteristic diagram showing a relation of rotation speeds between respective members in the planetary mechanism in Fig. 4.

Fig. 10 is a drive force diagram showing an idealistic relation between vehicle speeds and traction forces of a wheel loader.

Fig. 11 is a drive force diagram (a drive force diagram of the configuration of Table 1 as described later) showing one example of a relation between vehicle speeds and traction forces of the wheel loader.

Fig. 12 is a drive force diagram (a drive force diagram of the configuration of Table 2 as described later) showing another example of a relation between vehicle speeds and traction forces of the wheel loader.

Fig. 13 is a configuration diagram as similar to Fig. 3, showing a first modification example (configuration for executing internal lockup by a brake).

Fig. 14 is a configuration diagram as similar to Fig. 4, showing a second modification example (configuration in which an input shaft is connected to a first sun member and a first variator is connected to a carrier).

Fig. 15 is a configuration diagram as similar to Fig. 4, showing a third modification example (configuration in which an input shaft is connected to a first sun member and a first variator is connected to a second sun member).

Fig. 16 is a configuration diagram as similar to Fig. 4, showing a fourth modification example (configuration in which a second variator is connected to an output shaft).

Fig. 17 is a configuration diagram as similar to Fig. 7, showing a fifth modification example showing (another example in a case where a first variator, a second variator, a power absorption device and the like in a planetary stepless speed-changing mechanism in Fig. 3) are respectively configured of hydraulic equipment.

Fig. 18 is a characteristic diagram showing an example of a change over time in each of various state amounts at the switching from a forward rotation mode (forward mode) to a reverse rotation mode (backward mode).

Fig. 19 is a characteristic diagram showing an example of a change over time in each of various state amounts at the switching from a reverse rotation mode (backward mode) to a forward rotation mode (forward mode).

Fig. 20 is a configuration diagram as similar to Fig. 4, showing a second embodiment.

Fig. 21 is an enlarged view showing part (C) in Fig. 20.

Fig. 22 is an explanatory diagram showing a planetary mechanism in Fig. 20 as viewed from a power source side.

Fig. 23 is a characteristic diagram showing a relation of rotation speeds between three members in the planetary mechanism in Fig. 20.

Fig. 24 is a configuration diagram as similar to Fig. 20, showing a sixth modification example (configuration in which an input shaft is connected to a ring member and a first variator is connected to a carrier).

Fig. 25 is a configuration diagram as similar to Fig. 20, showing a seventh modification example (configuration in which an input shaft is connected to a carrier and a first variator is connected to a ring member).

**MODE FOR CARRYING OUT THE INVENTION**

Hereinafter, speed-changing devices according to embodiments and modification examples in the present invention will be explained in detail with reference to the accompanying drawings by taking a case of being applied to a vehicle (wheel loader) as an example.

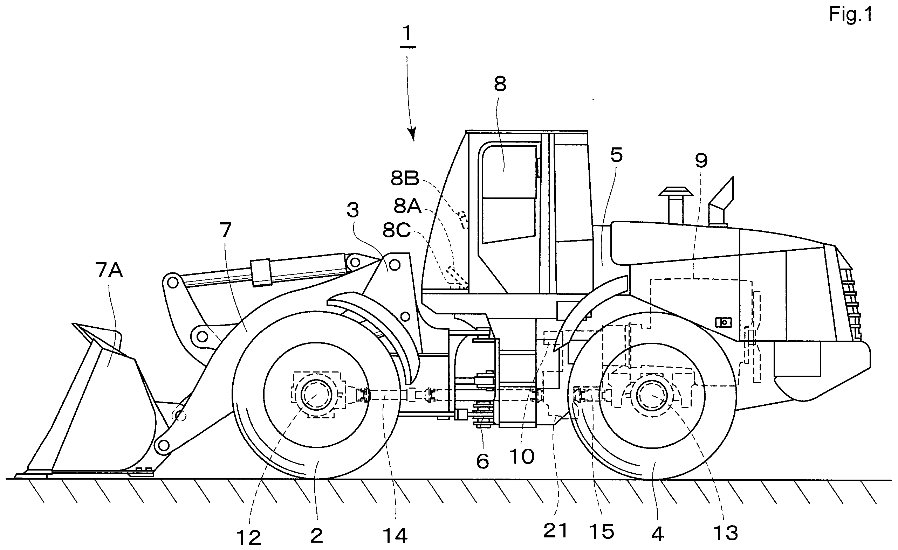

Fig. 1 to Fig. 9 show a first embodiment. In Fig. 1, a wheel loader 1 is a representative example of a vehicle (working vehicle). The wheel loader 1 is configured as an articulate type working vehicle in which a front vehicle body 3 provided with left and right front wheels 2 and a rear vehicle body 5 provided with left and right rear wheels 4 are connected to be bendable in the left-right direction. The front vehicle body 3 and the rear vehicle body 5 are configured as a vehicle body of the wheel loader 1. A center hinge 6 and a steering cylinder (not shown) are arranged between the front vehicle body 3 and the rear vehicle body 5, and expansion/contraction of the steering cylinder enables the front vehicle body 3 and the rear vehicle body 5 to bend about the center hinge 6 in the left-right direction. Thereby, the wheel loader 1 can perform the steering at the traveling.

A cargo working machine 7 also called a working mechanism is disposed in the front vehicle body 3 of the wheel loader 1 to be capable of tilting/lifting thereto. The cargo working machine 7 is provided with a loader bucket 7A. On the other hand, a cab 8 that defines therein an operating room, an engine 9, a hydraulic pump 10, a speed-changing device 21 as a transmission (power transmission device) and the like are arranged in the rear vehicle body 5 of the wheel loader 1. An accelerator pedal 8A as a control member for accelerating the vehicle and a forward/backward travel switching lever 8B (hereinafter, called FNR lever 8B) for switching a forward travel, a backward travel and a shift stage of the vehicle are arranged inside the cab 8. In addition, although omitted in illustration, a driver's seat, a steering wheel, a brake pedal, switches for parking brake and the like are arranged inside the cab 8.

An operation amount detector 8C is disposed in the accelerator pedal 8A to detect an operation amount $\theta 1$ of the accelerator pedal 8A. When the FNR lever 8B is operated by an operator, the FNR lever 8B switches the forward travel/retreat of the wheel loader 1 and also switches the shift stage. The operator switches the FNR lever 8B to a forward position (F) at the time of causing the wheel loader 1 to go forward. The operator switches the FNR lever 8B to a retreat position (R) at the time of causing the wheel loader 1 to go backward. The operator switches the FNR lever 8B to a neutral position (N) at the time of causing the wheel loader 1 to continue to stop without traveling or to stop in the middle of traveling. The operator switches the FNR lever 8B to rotate around a lever shaft at the time of switching the speed change stage.

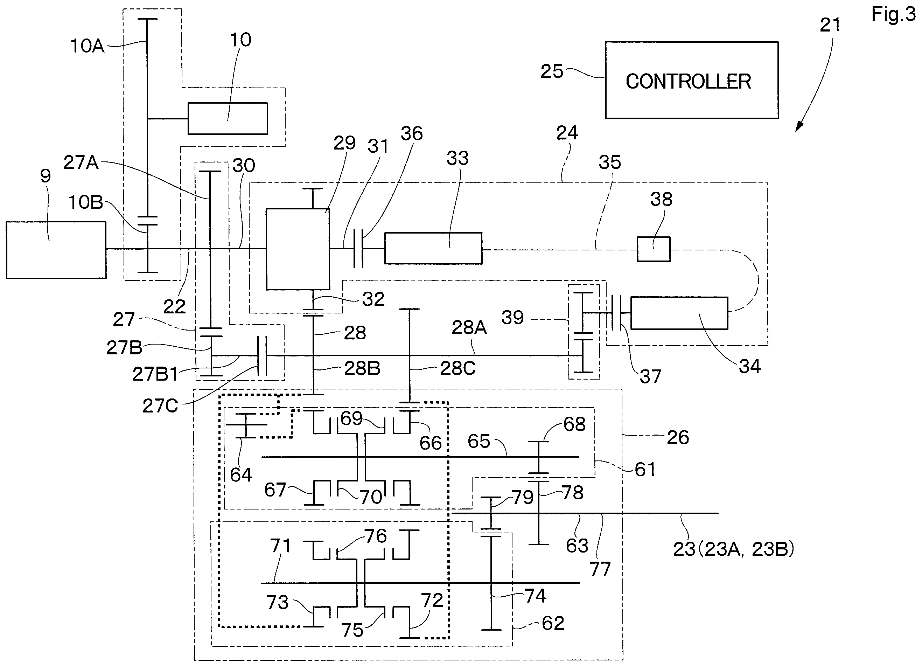

The engine 9 is a power source (prime mover) of the wheel loader 1. The power source may be configured of the engine 9 as a unit that is an internal combustion engine, and besides, may be configured of, for example, an engine and an electric motor or an electric motor as a unit. The hydraulic pump 10 is connected to the engine 9. The hydraulic pump 10 is a hydraulic source for operating the cargo working machine 7. As shown in Fig. 3 to be described later, the hydraulic pump 10 is connected via gears 10A, 10B to the engine 9.

A front axle 12 extending in the left-right direction is provided under the front vehicle body 3. The left and right front wheels 2 are respectively attached on both end sides of the front axle 12. On the other hand, a rear axle 13 extending in the left-right direction is provided under the rear vehicle body 5. The left and right rear wheels 4 are respectively attached on both end sides of the rear axle 13.

The front axle 12 is connected via a front propeller shaft 14 to the speed-changing device 21. The rear axle 13 is connected via a rear propeller shaft 15 to the speed-changing device 21. The speed-changing device 21 changes (increases and/or decreases) rotation of the engine 9 to be transmitted to the front propeller shaft 14 and the rear propeller shaft 15. That is, the power from the engine 9 is transmitted to the speed-changing device 21 connected to the engine 9.

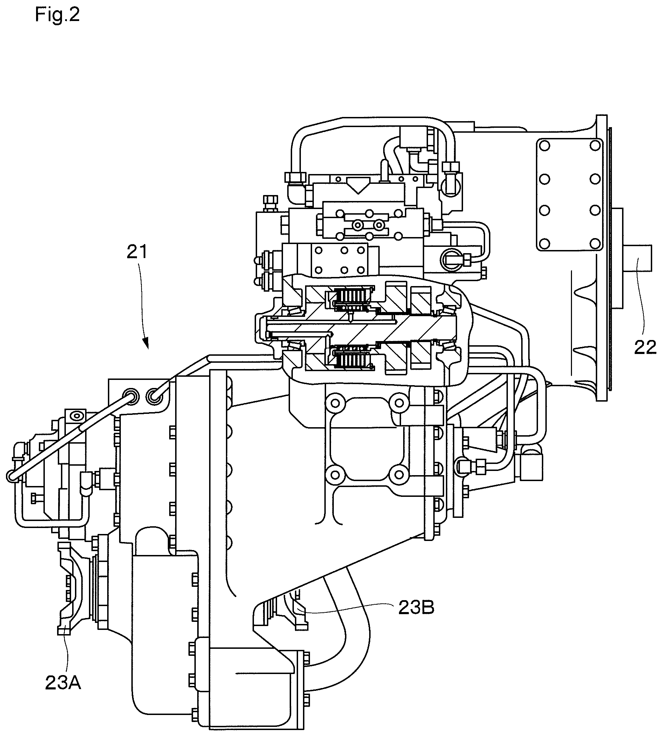

The power from the engine 9 is adjusted in a rotation number and in a rotation direction by the speed-changing device 21, which is then transmitted from a front output shaft 23A and a rear output shaft 23B of the speed-changing device 21 via the front propeller shaft 14 and the rear propeller shaft 15 to the front axle 12 and the rear axle 13. That is, as shown in Fig. 2, the speed-changing device 21 is provided with an input shaft 22 connected to the engine 9, the front output shaft 23A connected to the front propeller shaft 14 and the rear output shaft 23B connected to the rear propeller shaft 15. The speed-changing device 21 switches power transmission routes within the speed-changing device 21 to perform a speed change and a forward rotation/a reverse rotation between the input shaft 22 and the output shafts 23A, 23B.

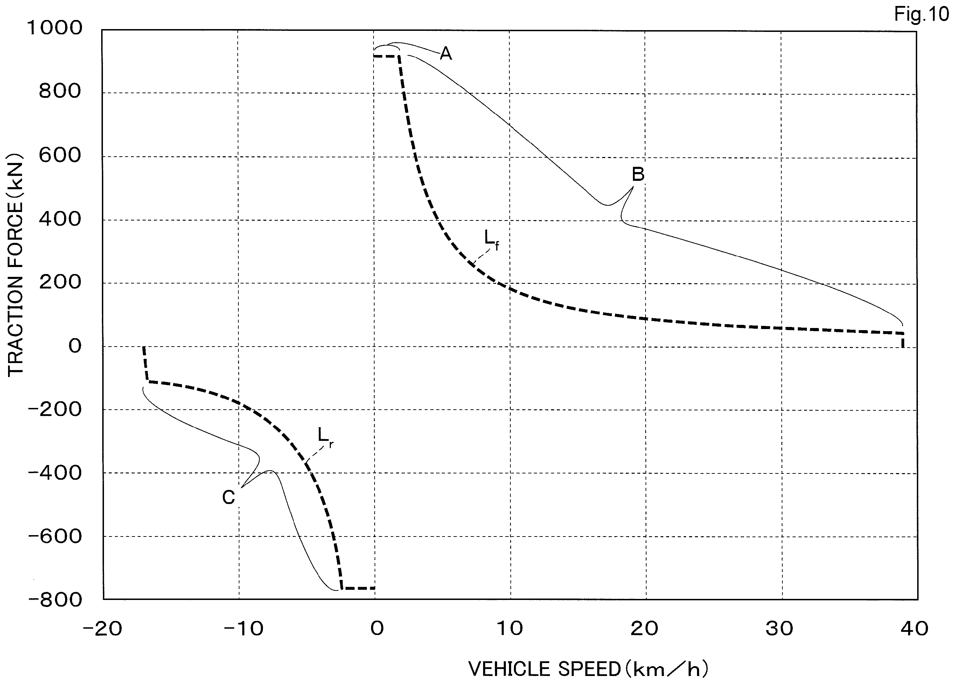

Here, Fig. 10 shows an idealistic drive force diagram of the wheel loader 1. In Fig. 10, an idealistic drive force line Lf in the forward direction and an idealistic drive force line Lr in the backward direction (retreat direction) are shown. At the forwarding time, a high traction force is required at the excavating, and a travel in a high vehicle speed (0 to 40km/h) is required at the deadheading. In addition, the wheel loader 1 needs to stably travel on the upslope at various grades provided in a quarry or the like. Therefore, for example, at a vehicle speed of 3km/h or more, a traction force is preferably the iso-horsepower regardless of the vehicle speed.

A range A in Fig. 10 shows a range in which a high traction force is required for excavation, that is, the range A of a drive power line at the excavating. A range B in Fig. 10 shows a range in which a traction force of the iso-horsepower is required regardless of the vehicle speed, that is, the range B of a drive power line of the iso-horsepower in the forward direction. A range C in Fig. 10 shows a range in which a traction force of the iso-horsepower is required regardless of the vehicle speed, that is, the range C of a drive power line of the iso-horsepower in the backward direction.

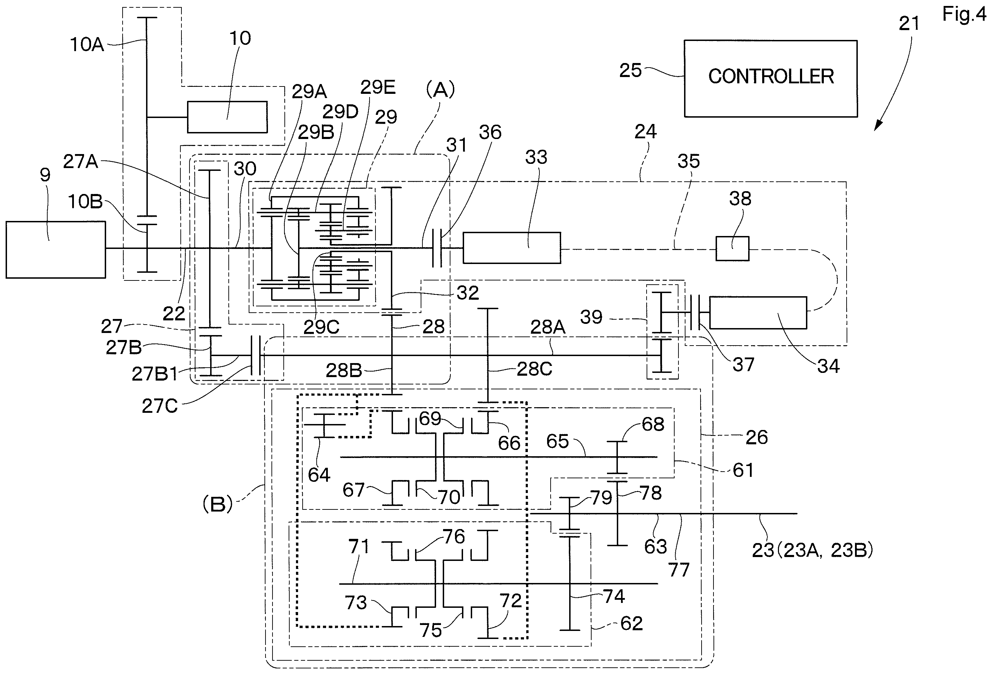

As shown in Fig. 3 and Fig. 4, the speed-changing device 21 according to the first embodiment is provided with a planetary stepless speed-changing mechanism 24, a direct joint mechanism 27 and a multistage speed-changing mechanism 26. In this case, the speed-changing device 21 is provided with a mode of transmitting power to the multistage speed-changing mechanism 26 while continuously speed-changing the planetary stepless speed-changing mechanism 24, a mode of transmitting power to the multistage speed-changing mechanism 26 by executing internal lockup of the planetary stepless speed-changing mechanism 24 and a mode of transmitting power to the multistage speed-changing mechanism 26 by an external lockup mechanism (direct joint mechanism 27) not via the planetary stepless speed-changing mechanism 24. The power transmission by the internal lockup is carried out by stopping the rotation of a member (for example, a first sun gear 29B) linked to a first variator 33 out of three rotation members, (for example, a carrier 29A, the first sun gear 29B and a second sun gear 29C) in the planetary gear mechanism 29, which constitute the planetary stepless speed-changing mechanism 24.

On the other hand, the power transmission by the external lockup is performed via the external lockup mechanism (direct joint mechanism 27) attached to an exterior of the planetary stepless speed-changing mechanism 24. In this case, the power transmission by the external lockup is performed in a state of stopping the power transmission by the planetary stepless speed-changing mechanism 24. This stopping is performed by releasing (or reducing the torque) the member (for example, the first sun gear 29B) linked to the first variator 33 out of the three members (for example, the carrier 29A, the first sun gear 29B and the second sun gear 29C) in the planetary gear mechanism 29.

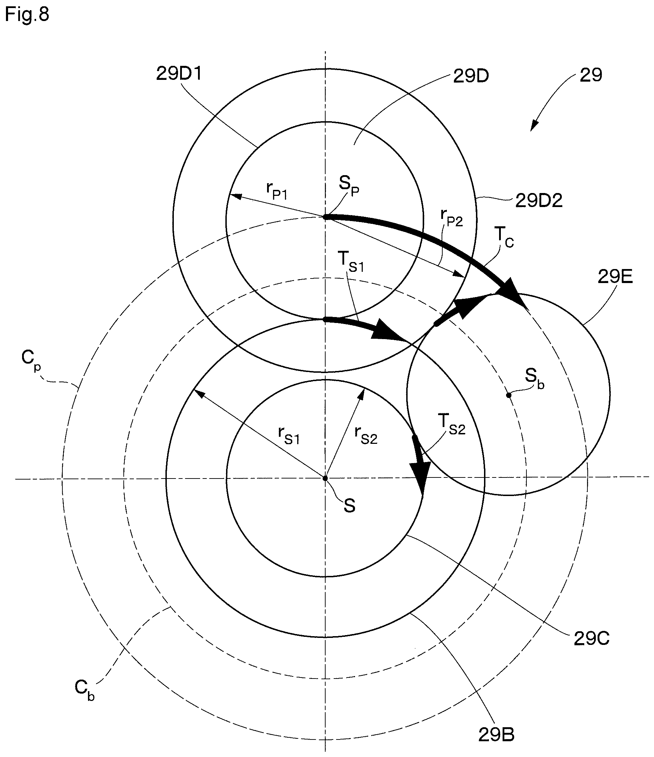

In addition, according to the first embodiment, as shown in Fig. 4, Fig. 5 and Fig. 8, the planetary gear mechanism 29 in the planetary stepless speed-changing mechanism 24 is provided with the two sun gears 29B, 29C, a planet gear 29D and a balance gear 29E revolving about a center axis S (Fig. 8) of the two sun gears 29B, 29C and rotating on its own axis, and one carrier 29A rotatably supporting the planet gear 29D and the balance gear 29E and rotating on its own axis about the center axis S of the two sun gears 29B, 29C.

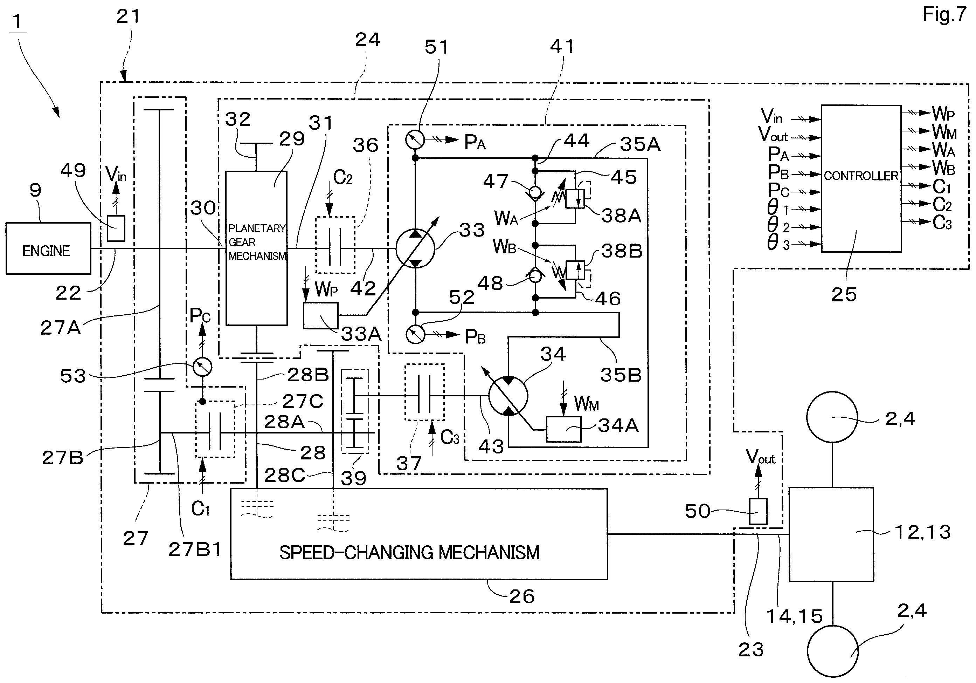

Hereinafter, an explanation will be in detail made of the speed-changing device 21 according to the first embodiment. It should be noted that in Fig. 3, the planetary gear mechanism 29 in the speed-changing device 21 is shown in a box (rectangular frame), on the other hand, Fig. 4 shows an internal part of the planetary gear mechanism 29, that is, also a specific gear arrangement of the planetary gear mechanism 29. In addition, in Fig. 3 and Fig. 4, for avoiding complication of the figures, the output shaft 23 of the speed-changing device 21 is shown in a simple manner as the common output shaft 23 (= output shafts 23A, 23B) that transmits the power to both the front axle 12 and the rear axle 13. That is, in Fig. 3 and Fig. 4, the configuration of dividing the power to the output shaft 23A on the front side and the output shaft 23B on the rear side through, for example, a center differential mechanism or the like is omitted in illustration. The omission of that configuration is similar in Fig. 7 as well to be described later. In addition, in Fig. 7 a hydraulic pump 10 and gears 10A, 10B are also omitted.

Fig. 3 and Fig. 4 are schematic diagrams of the speed-changing device 21 according to the first embodiment, more specifically the speed-changing device 21 provided with both the internal lockup and the external lockup. The speed-changing device 21 is provided with the input shaft 22 as an input member, the output shaft 23 as an output member, the planetary stepless speed-changing mechanism 24 as a stepless speed-changing mechanism (main speed-changing mechanism) and a controller 25. In addition, the speed-changing device 21 is provided with a multistage speed-changing mechanism 26 as a stepped speed-changing mechanism (sub speed-changing mechanism) and a direct joint mechanism 27 as an external lockup mechanism. The direct joint mechanism 27 is provided with a first clutch 27C to be connected at the time of transmitting the power through the direct joint mechanism 27.

In addition, the speed-changing device 21 is provided with an idler element 28 (an idler shaft 28A, a first idler gear 28B and a second idler gear 28C) that mechanically connects the planetary stepless speed-changing mechanism 24, the multistage speed-changing mechanism 26 and the direct joint mechanism 27. Further, as shown in Fig. 7 to be described later, the speed-changing device 21 is provided with a first speed detector 49, a second speed detector 50, a first pressure detector 51, a second pressure detector 52 and a third pressure detector 53.

The input shaft 22 of the speed-changing device 21 is rotated by the engine 9 as a power source (prime mover) mounted on the vehicle (wheel loader 1). That is, the input shaft 22 is connected to the engine 9 (drive shaft thereof). The input shaft 22 is provided with the gear 10B for transmitting the power to the hydraulic pump 10. The input shaft 22 is provided with an input gear 27A in the direct joint mechanism 27. The input shaft 22 is connected via a first connecting member 30 to the planetary stepless speed-changing mechanism 24 (more specifically, the planetary gear mechanism 29). On the other hand, the power is outputted from the output shaft 23 of the speed-changing device 21. The output shaft 23 of the speed-changing device 21 also acts as an output shaft 77 of the multistage speed-changing mechanism 26 to be described later. The output shaft 23 outputs the rotation via the front axle 12 and/or the rear axle 13 in the wheel loader 1 to the front wheels 2 and/or the rear wheels 4.

The power inputted to the speed-changing device 21 from the input shaft 22 is transmitted via the planetary stepless speed-changing mechanism 24 or the direct joint mechanism 27 to the idler element 28. The power transmitted to the idler element 28 is outputted through the multistage speed-changing mechanism 26 from the output shaft 23. The planetary stepless speed-changing mechanism 24 is disposed between the input shaft 22 and the output shaft 23 (specifically between the input shaft 22 and the multistage speed-changing mechanism 26, more specifically between the input shaft 22 and the idler element 28). The planetary stepless speed-changing mechanism 24 changes the rotation in the input shaft 22-side to be transmitted to the output shaft 23-side. An input side of the planetary stepless speed-changing mechanism 24 is connected to the input shaft 22 on which the input gear 27A in the direct joint mechanism 27 is disposed. An output side of the planetary stepless speed-changing mechanism 24 is connected to the idler shaft 28A in the idler element 28.

The planetary stepless speed-changing mechanism 24 forms a state of the internal lockup by stopping a second connecting member 31 for connecting the planetary gear mechanism 29 (for example, the first sun gear 29B) and the first variator 33. The state of the internal lockup is formed, for example, by braking the first variator 33 to stop the second connecting member 31. The brake operation of the first variator 33 will be described later. When the planetary stepless speed-changing mechanism 24 is in a state of the internal lockup, the power inputted from the input shaft 22 is transmitted via "the first connecting member 30 for connecting the planetary gear mechanism 29 (for example, the carrier 29A) and the input shaft 22", "the planetary gear mechanism 29" and "a third connecting member 32 for connecting the planetary gear mechanism 29 (for example, the second sun gear 29C) and the idler element 28" to the idler element 28 (the first idler gear 28B).

In the first embodiment, the speed-changing device 21 can optionally select the power transmission route for transmitting the power inputted from the engine 9 to the input shaft 22 to the multistage speed-changing mechanism 26 from three routes of the following (A), (B) and (C).

(A) Stepless speed-changing route (first power transmission route) for transmitting the power inputted from the engine 9 to the input shaft 22 to the multistage speed-changing mechanism 26 in a state where the planetary stepless speed-changing mechanism 24 is continuously speed-changed. At this time, the first clutch 27C as a direct joint clutch is disengaged, and a second clutch 36 and a third clutch 37 of the planetary stepless speed-changing mechanism 24 are engaged (connected) . A state of transmitting the power via the stepless speed-changing route is defined as a first power transmission state.

(B) Internal lockup route (second power transmission route) for transmitting the power inputted from the engine 9 to the input shaft 22 to the multistage speed-changing mechanism 26 in a state where the planetary stepless speed-changing mechanism 24 is changed to the internal lockup. At this time, the first clutch 27C as the direct joint clutch is disengaged, and the second clutch 36 in the planetary stepless speed-changing mechanism 24 is engaged (connected). The third clutch 37 is engaged (connected) as needed. A state of transmitting the power via the internal lockup route is defined as a second power transmission state.

(C) External lockup route (third power transmission route) for transmitting the power inputted from the engine 9 to the input shaft 22 via the direct joint mechanism 27 to the multistage speed-changing mechanism 26. This external lockup route is a power transmission route via the direct joint mechanism 27 not via the planetary stepless speed-changing mechanism 24. At this time, the first clutch 27C as the direct joint clutch is engaged (connected), and the second clutch 36 and the third clutch 37 in the planetary stepless speed-changing mechanism 24 are disengaged as needed. A state of transmitting the power via the external lockup route is defined as the third power transmission state.

In the embodiment, at the time it is appropriate to continuously speed-change the planetary stepless speed-changing mechanism 24, the power transmission is performed by continuously speed-changing the planetary stepless speed-changing mechanism 24. At the time it is appropriate to cause the planetary stepless speed-changing mechanism 24 to operate in the internal lockup, the power transmission is performed by causing the planetary stepless speed-changing mechanism 24 to operate in the internal lockup. At the time it is appropriate to perform the power transmission via the direct joint mechanism 27, the power transmission is performed via the direct joint mechanism 27.

Table 1 described below shows a combination of power transmission routes in the speed-changing device 21 provided with both the internal lockup and the external lockup. In this case, the multistage speed-changing mechanism 26 is provided with shift stages of a forward three-speed and a backward one-speed. That is, the multistage speed-changing mechanism 26 can select the shift stage from a forward one-speed, a forward two-speed, a forward three-speed and a backward one-speed.

[Table 1]

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| forward one-speed stepless speed change | planetary stepless speed-changing mechanism (stepless speed-changing operation) | forward one-speed | 0 to 10 | excavation startup transport deadhead |
| forward one-speed internal lockup | planetary stepless speed-changing mechanism (internal lockup operation) | forward one-speed | 5 to 10 | transport deadhead |
| forward one-speed external lockup | external lockup mechanism | forward one-speed | 7 to 14 | transport dead-head |

(continued)

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| forward two-speed internal lockup | planetary stepless speed-changing mechanism (internal lockup operation) | forward two-speed | 9 to 18 | deadhead |
| forward two-speed external lockup | external lockup mechanism | forward two-speed | 12 to 24 | deadhead |
| forward three-speed internal lockup | planetary stepless speed-changing mechanism (internal lockup operation) | forward three-speed | 16 to 31 | deadhead |
| forward three-speed external lockup | external lockup mechanism | forward three-speed | 20 to 40 | deadhead |
| backward one-speed stepless speed change | planetary stepless speed-changing mechanism (stepless speed-changing operation) | backward one-speed | 0 to 12 | startup transport deadhead |
| backward one-speed internal lockup | planetary stepless speed-changing mechanism (internal lockup operation) | backward one-speed | 6 to 12 | transport deadhead |
| backward one-speed external lockup | external lockup mechanism | backward one-speed | 8 to 16 | transport deadhead |

As shown in Table 1, at the forward traveling, the power transmission states are arranged in order of "forward one-speed stepless speed change", "forward one-speed internal lockup", "forward one-speed external lockup", "forward two-speed internal lockup", "forward two-speed external lockup", "forward three-speed internal lockup" and "forward three-speed external lockup" from the traveling state where the vehicle speed is low. At the backward traveling, the power transmission states are arranged in order of "backward one-speed stepless speed change", "backward one-speed internal lockup" and "backward one-speed external lockup" from the traveling state where the vehicle speed is low.

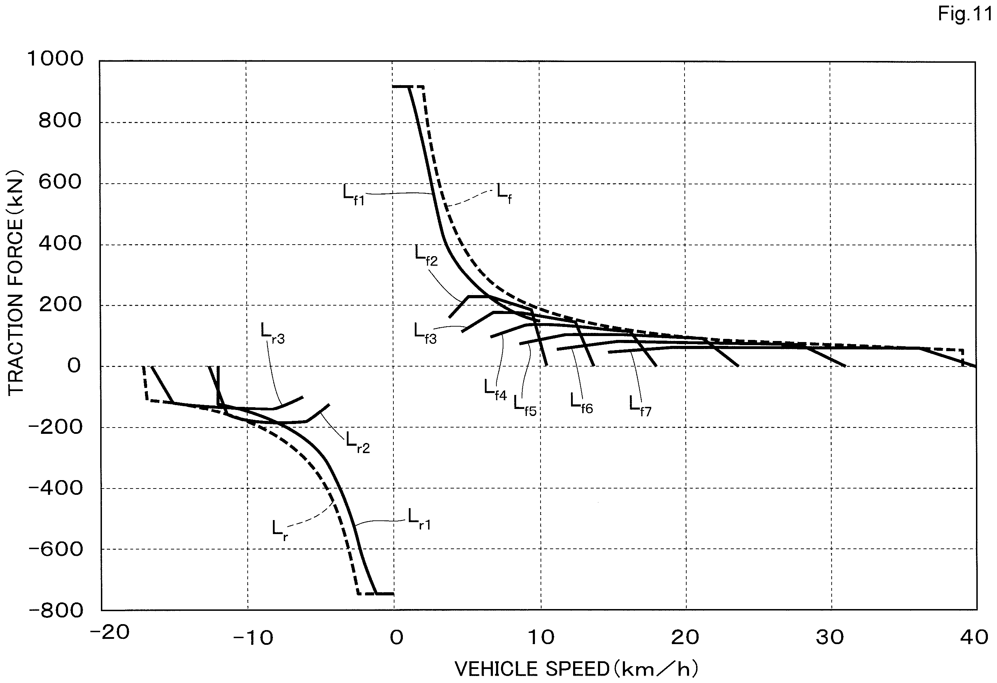

Fig. 11 shows a drive force diagram of the speed-changing device 21 provided with the power transmission states in Table 1. As shown in Fig.11, as to the forward travel, the speed change is made possible in seven stages of a forward one-speed stepless speed change Lf1, a forward one-speed internal lockup Lf2, a forward one-speed external lockup Lf3, a forward two-speed internal lockup Lf4, a forward two-speed external lockup Lf5, a forward three-speed internal lockup Lf6 and a forward three-speed external lockup Lf7.

On the other hand, as to the backward travel, the speed change is made possible in three stages of a backward one-speed stepless speed change Lr1, a backward one-speed internal lockup Lr2 and a backward one-speed external lockup Lr3. The speed-changing device 21 provided with the power transmission states in Table 1 can obtain a high traction force at the startup in the backward direction, and a high vehicle speed (0 to 16km/h) can be obtained at the transporting and the deadheading. In addition, the wheel loader 1 can stably travel on the upslopes at various grades.

It should be noted that when the speed stage of the multistage speed-changing mechanism 26 is at a forward two-speed and/or a forward three-speed, the power transmission state of the stepless speed-changing operation may be provided. For example, a combination of power transmission routes as shown in Table 2 described below may be adopted.

[Table 2]

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| forward one-speed stepless speed change | planetary stepless speed-changing mechanism (stepless speed-changing operation) | forward one-speed | 0 to 10 | excavation startup transport deadhead |
| forward one-speed internal lockup | planetary stepless speed-changing mechanism (internal lockup operation) | forward one-speed | 5 to 10 | transport deadhead |

(continued)

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| forward one-speed external lockup | external lockup mechanism | forward one-speed | 7 to 14 | transport deadhead |
| forward two-speed stepless speed change | planetary stepless speed-changing mechanism (stepless speed-changing operation) | forward two-speed | 0 to 18 | excavation startup transport deadhead |
| forward two-speed internal lockup | planetary stepless speed-changing mechanism (internal lockup operation) | forward two-speed | 9 to 18 | deadhead |
| forward two-speed external lockup | external lockup mechanism | forward two-speed | 12 to 24 | deadhead |
| forward three-speed stepless speed change | planetary stepless speed-changing mechanism (stepless speed-changing operation) | forward three-speed | 0 to 31 | excavation startup transport deadhead |
| forward three-speed internal lockup | planetary stepless speed-changing mechanism (internal lockup operation) | forward three-speed | 16 to 31 | deadhead |
| forward three-speed external lockup | external lockup mechanism | forward three-speed | 20 to 40 | deadhead |
| backward one-speed stepless speed change | planetary stepless speed-changing mechanism (stepless speed-changing operation) | backward one-speed | 0 to 12 | startup transport deadhead |
| backward one-speed internal lockup | planetary stepless speed-changing mechanism (internal lockup operation) | backward one-speed | 6 to 12 | transport deadhead |
| backward one-speed external lockup | external lockup mechanism | backward one-speed | 8 to 16 | transport deadhead |

As shown in Table 2, at the forward traveling, the power transmission states may be arranged in order of "forward one-speed stepless speed change", "forward one-speed internal lockup", "forward one-speed external lockup", "forward two-speed stepless speed change", "forward two-speed internal lockup", "forward two-speed external lockup", "forward three-speed stepless speed change", "forward three-speed internal lockup" and "forward three-speed external lockup" from the traveling state where the vehicle speed is low. At the backward traveling, the power transmission states are arranged as similar to those in Table 1.

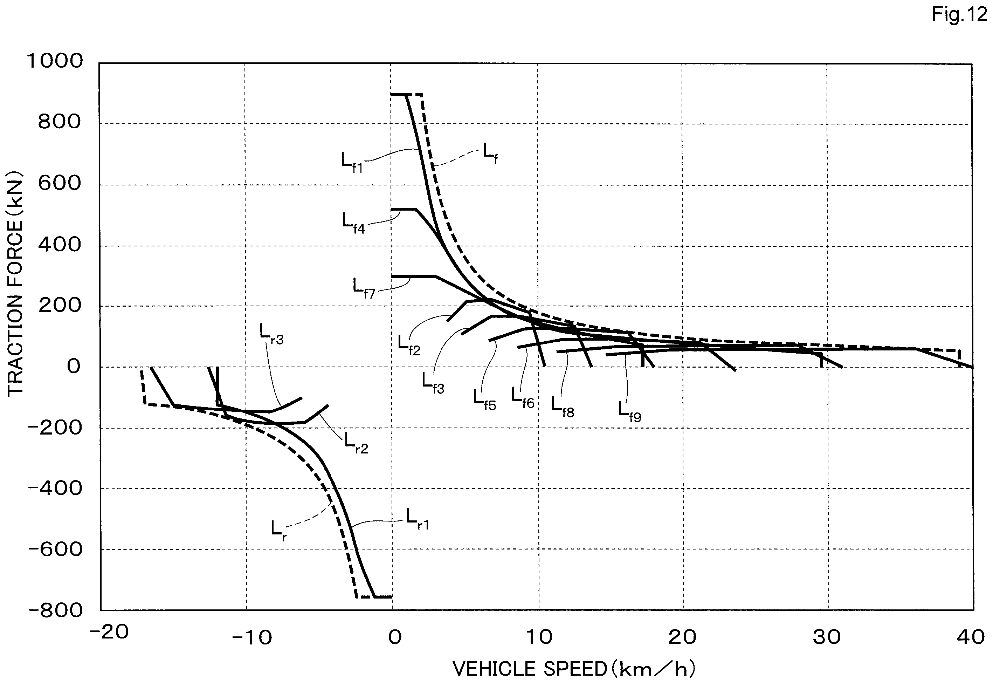

Fig. 12 shows a drive force diagram of the speed-changing device 21 provided with the power transmission states in Table 2. As shown in Fig. 12, as to the forward travel, the speed change is made possible in nine stages of a forward one-speed stepless speed change Lf1, a forward one-speed internal lockup Lf2, a forward one-speed external lockup Lf3, a forward two-speed stepless speed change Lf4, a forward two-speed internal lockup Lf5, a forward two-speed external lockup Lf6, a forward three-speed stepless speed change Lf7, a forward three-speed internal lockup Lf8 and a forward three-speed external lockup Lf9.

An advantage of having the forward two-speed stepless speed change Lf4 and the forward three-speed stepless speed change Lf7 lies at the time of changing the power transmission state from the forward two-speed stepless speed change Lf4 to the forward one-speed external lockup Lf3 and at the time of changing the power transmission state from the forward three-speed stepless speed change Lf7 to the forward two-speed external lockup Lf6. In a case where in the wheel loader 1, the speed-changing device 21 transmits a traction force equal to or more than 70% of the vehicle speed corresponding to Lf line as shown in Fig. 12, it is preferable not to use the forward two-speed stepless speed change Lf4 and the forward three-speed stepless speed change Lf7 for fuel saving. This is because in the stepless speed-changing state, a power transmission efficiency of the speed-changing device 21 is inferior as compared with that of the internal lockup or external lockup.

On the other hand, in a case where the speed-changing device 21 transmits a traction force equal to or less than 40% of the vehicle speed corresponding to Lf line, it is preferable to use the forward two-speed stepless speed change Lf4 and the forward three-speed stepless speed change Lf7 for fuel saving. This is because in the stepless speed-changing state, the power transmission efficiency of the speed-changing device 21 is inferior as compared with that of the internal lockup or external lockup but an efficiency of the engine 9 as a power source deteriorates more than that. In this case, the rotation speed of the engine 9 is lowered to improve the efficiency of the engine 9, thereby making it possible to improve a total efficiency of the speed-changing device 21 and the engine 9. Specifically, when the speed-changing device 21 transmits the traction force equal to or less than 40% of the vehicle speed corresponding to Lf line in a range of a vehicle speed of 0 to 16 km/h, the forward three-speed stepless speed change can achieve fuel efficiency. Also, when the speed-changing device 21 transmits the traction force equal to or less than 40% of the vehicle speed corresponding to Lf line in a range of a vehicle speed of 0 to 9 km/h, the forward two-speed stepless speed change can achieve fuel efficiency.

Next, an explanation will be made of the planetary stepless speed-changing mechanism 24 with reference to Fig. 3. The planetary stepless speed-changing mechanism 24 is provided with the planetary gear mechanism 29 as a planetary mechanism, the first variator 33, a second variator 34, a transmission element 35, the second clutch 36 and the third clutch 37. The planetary gear mechanism 29 is connected via a first connecting member 30 to an input side (engine 9-side). The planetary gear mechanism 29 is connected via a second connecting member 31 to a first output side (first variator 33-side). The planetary gear mechanism 29 is connected via a third connecting member 32 to a second output side (idler element 28-side).

The first variator 33 and the second variator 34 are configured of an electric motor and generator (an electric motor and an electric generator), or a hydraulic pump and motor (a hydraulic pump and a hydraulic motor). Specifically in a case where the first variator 33 is configured of the electric motor (electric generator), the second variator 34 is configured of the electric generator (electric motor). In a case where the first variator 33 is configured of the hydraulic pump (hydraulic motor), the second variator 34 is configured of the hydraulic motor (hydraulic pump). As shown in Fig. 7 to be described later, in the embodiment the first variator 33 and the second variator 34 are configured of the hydraulic pump and motor (fluid-pressure rotary machine of performing a pumping operation or a motoring operation, more specifically a hydraulic rotary machine).

The first variator 33 (hereinafter, also called a first hydraulic pump and motor 33) and the second variator 34 (hereinafter, also called a second hydraulic pump and motor 34) are configured to be able to, in a case where a rotation speed of the first variator 33 is different from that of the second variator 34, perform the power transmission between them while continuously performing the speed change. Therefore, the transmission element 35 is disposed between the first variator 33 and the second variator 34 to transmit the power therebetween. The transmission element 35 is configured of, for example, an electrical wire or a hydraulic pipe arrangement. As shown in Fig. 7, in the embodiment the transmission element 35 is configured of a pair of main pipelines 35A, 35B (a first main pipeline 35A and a second main pipeline 35B).

A power absorption source 38 is disposed in the middle of the transmission element 35. The power absorption source 38 is a device for absorbing (disposing of or storing) power. The power absorption source 38 absorbs (disposes of or stores) the power exceeding an amount of the power that can be received by the second variator 34 out of the power of the first variator 33. In addition, the power absorption source 38 absorbs (disposes of or stores) the power exceeding an amount of the power that can be received by the first variator 33 out of the power of the second variator 34.

The power absorption source 38 may be configured of, for example, a hydraulic accumulator or an electric storage device (storage battery) as a device for storing power (power storage device). In addition, the power absorption source 38 may be configured of, for example, a communication valve (relief valve or on-off valve) or a resistance device (electrical resistance) as a device for disposing of power (power disposing device). As shown in Fig. 7, in the embodiment the power absorption source 38 is configured of variable relief valves 38A, 38B (first variable relief valve 38A and second variable relief valve 38B). The functions of the first variator 33, the second variator 34 and the transmission element 35 may be achieved by a transmission with a limitless speed change ratio (IVT). In a case where the first variator 33 and the second variator 34 are configured of the electric motor and generator, they may be configured to be provided with an inverter and a converter as needed.

The second clutch 36 is disposed between the planetary gear mechanism 29 and the first variator 33, that is, between the second connecting member 31 and the first variator 33. The second clutch 36 is configured of, for example, a clutch (friction plates) by friction joint, a dog clutch or a dog clutch with synchromesh. The second clutch 36 performs mechanical engagement (connection) and disengagement of the second connecting member 31 and the first variator 33 therebetween. That is, the second clutch 36 switches the transmission and release of power of the planetary gear mechanism 29 and the first variator 33 therebetween.

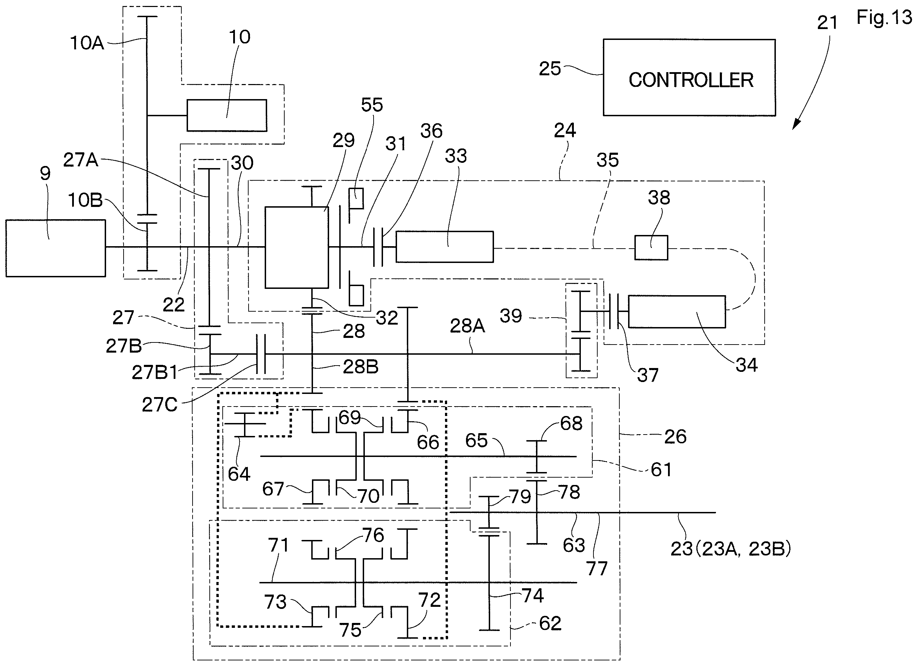

The controller 25 is configured of a microcomputer provided with, for example, a calculation circuit (CPU), a memory and the like. The controller 25 controls engagement and disengagement of the first clutch 27C, engagement and disengagement of the second clutch 36 and engagement and disengagement of the third clutch 37. The controller 25 controls a rotation speed of the first variator 33. The controller 25 controls a rotation speed of the second variator 34. The controller 25 controls the power absorption source 38 (variable relief valves 38A, 38B). The controller 25 controls a brake mechanism 55 (Fig. 13) to be described later, as needed. Further, the controller 25 controls engagement and disengagement of a forward one-speed clutch 69, a backward one-speed clutch 70, a forward two-speed clutch 75 and a forward three-speed clutch 76 in the multistage speed-changing mechanism 26 to be described later.

Here, the controller 25 controls the engagement and disengagement of the second clutch 36. For example, when the power transmission by the planetary stepless speed-changing mechanism 24 is unnecessary, the controller 25 outputs a signal for disengaging the second clutch 36 to disengage the second clutch 36. Thereby, the rotation of the first variator 33 can be stopped (or reduced) to reduce power losses due to the rotation of the first variator 33.

The second variator 34 is connected via the third clutch 37 to the idler element 28. The third clutch 37 switches the transmission and release of power of the second variator 34 and the idler element 28 therebetween. That is, the third clutch 37 is disposed between the second variator 34 and the idler element 28. The idler element 28 is provided with the idler shaft 28A and the first idler gear 28B and a second idler gear 28C disposed in the idler shaft 28A. The idler shaft 28A is connected via the first clutch 27C to a lockup gear 27B (more specifically, a rotation shaft 27B1 of the lockup gear 27B) of the direct joint mechanism 27.

In addition, the idler shaft 28A is connected via a transmission 39 and the third clutch 37 to the second variator 34. The first idler gear 28B is meshed with the third connecting member 32 and is connected via the third connecting member 32 to the planetary gear mechanism 29. In addition, the first idler gear 28B is meshed with a counter gear 64 (backward one-speed gear 67) and a forward three-speed gear 73 in the multistage speed-changing mechanism 26. In addition, the second idler gear 28C is meshed with a forward one-speed gear 66 and a forward two-speed gear 72 in the multistage speed-changing mechanism 26. Because of this, the first idler gear 28B and the second idler gear 28C are connected to the multistage speed-changing mechanism 26.

The transmission 39 is disposed between the second variator 34 and the idler element 28 (idler shaft 28A) to perform a speed change between the second variator 34 and the idler element 28. This transmission 39 may be omitted. In this case, the third clutch 37 is disposed between the idler shaft 28A of the idler element 28 and a rotation shaft (second rotation shaft 43) of the second variator 34, and the engagement (connection) and disengagement of the idler shaft 28A and the rotation shaft of the second variator 34 can be performed by the third clutch 37.

The third clutch 37 is configured of, for example, a clutch (friction plates) by friction joint, a dog clutch or a dog clutch with synchromesh. The third clutch 37 performs mechanical engagement (connection) and disengagement of the second variator 34 and the idler element 28 therebetween. The controller 25 controls the engagement and disengagement of the third clutch 37. For example, when the power transmission by the second variator 34 is unnecessary, the controller 25 outputs a signal for disengaging the third clutch 37 to disengage the third clutch 37. Thereby, the rotation of the second variator 34 can be stopped (or reduced) to reduce power losses due to the rotation of the second variator 34. However, the third clutch 37 is not necessarily disengaged under these conditions.

The power transmitted to the first connecting member 30 from the engine 9 is distributed to the second connecting member 31 linked to the first variator 33 and the third connecting member 32 linked to the idler element 28 by the planetary gear mechanism 29. The power transmitted to the second connecting member 31 is transmitted via the second clutch 36, the first variator 33, the transmission element 35, the second variator 34, the third clutch 37 and the transmission 39 to the idler element 28. The power transmitted to the third connecting member 32 is transmitted to the idler element 28. A distribution ratio in torque between the second connecting member 31 and the third connecting member 32 is always constant and depends upon a type and a meshing radius of gears of the planetary gear mechanism 29.

However, since the distribution ratio in torque between the second connecting member 31 and the third connecting member 32 is constant, the power is not always transmitted from the first variator 33 to the second variator 34, and in some cases the power is transmitted from the second variator 34 to the first variator 33. The power to be transmitted from the third variator 32 to the idler element 28 is smaller in a loss than the power via the first variator 33 and the second variator 34 from the second connecting member 31. Therefore, the planetary stepless speed-changing mechanism 24 in which the variators 33, 34 and the planetary gear mechanism 29 are combined has a higher power transmission efficiency than the stepless speed-changing device configured to perform the power transmission by the variator only.

Fig. 7 shows a specific configuration of each of the first variator 33, the second variator 34, the transmission element 35 and the power absorption device 38. As shown in Fig. 7, the planetary stepless speed-changing mechanism 24 is provided with the planetary gear mechanism 29, a hydrostatic stepless speed-changing mechanism 41, the second clutch 36 and the third clutch 37. The hydrostatic stepless speed-changing mechanism 41 is provided with a first rotation shaft 42, the first hydraulic pump and motor 33 corresponding to the first variator 33, the pair of main pipelines 35A, 35B (the first main pipeline 35A and the second main pipeline 35B) corresponding to the transmission element 35, the second hydraulic pump and motor 34 corresponding to the second variator 34, a second rotation shaft 43, the variable relief valves 38A, 38B (the first variable relief valve 38A and the second variable relief valve 38B) corresponding to the power absorption device 38, a connecting pipeline 44, bypass pipelines 45, 46 and check valves 47, 48.

The first rotation shaft 42 is equivalent to an input shaft of the hydrostatic stepless speed-changing mechanism 41. The first rotation shaft 42 corresponds to a rotation shaft of the first hydraulic pump and motor 33. The second rotary shaft 43 is equivalent to an output shaft of the hydrostatic stepless speed-changing mechanism 41. The second rotation shaft 43 corresponds to a rotation shaft of the second hydraulic pump and motor 34. The first hydraulic pump and motor 33 is connected via the second clutch 36 to an output side of the planetary gear mechanism 29. The first hydraulic pump and motor 33 causes hydraulic oil to flow into the pair of main pipelines 35A, 35B due to the rotation of the first rotation shaft 42.

The first hydraulic pump and motor 33 is configured of, for example, a swash plate or an axial hydraulic pump of a variable displacement type (hydraulic rotary machine). The first hydraulic pump and motor 33 is hydraulic equipment (hydraulic pump or hydraulic motor) that functions as a hydraulic pump when power is inputted thereto from the first rotation shaft 42 and functions as a hydraulic motor when power is outputted to the first rotation shaft 42. The first hydraulic pump and motor 33 is provided with a regulator 33A for adjusting a capacity (pump capacity and motor capacity). The regulator 33A is variably controlled based upon commands (command signals $W_p$) from the controller 25.

The pair of main pipelines 35A, 35B establish connection between a pair of delivery/discharge ports of the first hydraulic pump and motor 33 and a pair of delivery/discharge ports of the second hydraulic pump and motor 34. The second hydraulic pump and motor 34 is connected via the pair of main pipelines 35A, 35B (first main pipeline 35A and second main pipeline 35B) to the first hydraulic pump and motor 33. The second hydraulic pump and motor 34 rotates by hydraulic oil supplied from the first hydraulic pump and motor 33. The second hydraulic pump and motor 34 is connected via the third clutch 37 and the transmission 39 to the idler element 28 (idler shaft 28A). The second hydraulic pump and motor 34 causes hydraulic oil to flow into the pair of main pipelines 35A, 35B due to the rotation of the second rotation shaft 43.

The second hydraulic pump and motor 34 is configured of, for example, a swash plate or an axial hydraulic pump of a variable displacement type (hydraulic rotary machine). The second hydraulic pump and motor 34 is hydraulic equipment (hydraulic motor or hydraulic pump that functions as a hydraulic motor when power is outputted to the second rotation shaft 43 and functions as a hydraulic pump when power is inputted thereto from the second rotation shaft 43. The second hydraulic pump and motor 34 is provided with a regulator 34A for adjusting a capacity (motor capacity and pump capacity). The regulator 34A is variably controlled based upon commands (command signals $W_M$) from the controller 25.

The hydrostatic stepless speed-changing mechanism 41 is provided with the variable relief valves 38A, 38B each setting pressure (relief setting pressure, relief start pressure) of which can be changed and the check valves 47, 48 that allow communication of hydraulic oil in one direction and block communication of hydraulic oil in the reversing direction. That is, the connection between the first main pipeline 35A and the second main pipeline 35B in the hydrostatic stepless speed-changing mechanism 41 is established by the connecting pipeline 44. The first hydraulic pump and motor 33 and the second hydraulic pump and motor 34 transmit the power by the communication of operating oil therebetween via the pair of main pipelines 35A, 35B. For example, when the rotation on the input shaft 22-side is changed to be transmitted to the output shaft 23-side, the pressure of the first main pipeline 35A is higher than that in the second main pipeline 35B. In addition, for example, when the rotation on the output shaft 23-side is changed to be transmitted to the input shaft 22-side, the pressure of the second main pipeline 35B is higher than that in the first main pipeline 35A. The pair of check valves 47, 48 are arranged in the connecting pipeline 44 for the connection between the first main pipeline 35A and the second main pipeline 35B.

The one check valve 47 (hereinafter, also called a first check valve 47) allows communication of hydraulic oil from the second main pipeline 35B-side toward the first main pipeline 35A-side and blocks the communication of hydraulic oil in the reversing direction. That is, the first check valve 47 causes the flow of the hydraulic oil from the second main pipeline 35B to the first main pipeline 35A to be in the communicating state and blocks the flow of the hydraulic oil from the first main pipeline 35A to the second main pipeline 35B. The other check valve 48 (hereinafter, also called the second check valve 48) allows communication of hydraulic oil from the first main pipeline 35A-side toward the second main pipeline 35B-side and blocks the communication of hydraulic oil in the reversing direction. That is, the second check valve 48 causes the flow of the hydraulic oil from the first main pipeline 35A to the second main pipeline 35B to be in the communicating state and blocks the flow of the hydraulic oil from the second main pipeline 35B to the first main pipeline 35A.

The bypass pipelines 45, 46 that bypass the respective check valves 47, 48 are connected to the connecting pipeline 44. The first bypass pipeline 45 branches off from the connecting pipeline 44 and bypasses the first check valve 47 to be connected to the connecting pipeline 44. The second bypass pipeline 46 branches off from the connecting pipeline 44 and bypasses the second check valve 48 to be connected to the connecting pipeline 44. The variable relief valves 38A, 38B are arranged in the middle of the bypass pipelines 45, 46.

That is, the first variable relief valve 38A is disposed in the middle of the first bypass pipeline 45. The first variable relief valve 38A causes the flow of the hydraulic oil from the first main pipeline 35A to the second main pipeline 35B to be in the blocking state in a case where the pressure of the first main pipeline 35A is equal to or less than a certain pressure and to be in the communicating state in a case where the pressure of the first main pipeline 35A exceeds the certain pressure. On the other hand, the second variable relief valve 38B is disposed in the middle of the second bypass pipeline 46. The second variable relief valve 38B causes the flow of the hydraulic oil from the second main pipeline 35B to the first main pipeline 35A to be in the blocking state in a case where the pressure of the second variable relief valve 38B is equal to or less than a certain pressure and to be in the communicating state in a case where the pressure of the second variable relief valve 38B exceeds the certain pressure. The variable relief valves 38A, 38B each are configured of an electric relief valve (for example, an electromagnetic relief valve) an opening pressure (relief pressure) of which changes in response to command signals (command signal $W_A$, $W_B$) from the controller 25. A change in a setting pressure (relief setting pressure, that is, relief starting pressure) of each of the variable relief valves 38A, 38B is made based upon command signals (command signal $W_A$, $W_B$) from the controller 25.

A first speed detector 49 is disposed in the input shaft 22 in the speed-changing device 21. The first speed detector 49 is a rotation detecting sensor that detects a rotation speed and a rotation direction of the input shaft 22. The rotation speed of the input shaft 22 corresponds to a rotation speed of the engine 9 (hereinafter, called an engine rotation speed $V_{in}$). The first speed detector 49 outputs a detection signal corresponding to the engine rotation speed $V_{in}$ to the controller 25. A second speed detector 50 is disposed in the output shaft 23 in the speed-changing device 21. The second speed detector 50 is a rotation detecting sensor that detects a rotation speed of the output shaft 23 (hereinafter, called an output rotation speed $V_{out}$) and a rotation direction of the output shaft 23. The output rotation speed $V_{out}$ corresponds to a vehicle speed. The second speed detector 50 outputs detection signals corresponding to the output rotation speed $V_{out}$ and the rotation direction to the controller 25.

A first pressure detector 51 is disposed in the first main pipeline 35A. The first pressure detector 51 is a pressure sensor that detects a hydraulic pressure (pressure) of the first main pipeline 35A. The first pressure detector 51 outputs a detection signal corresponding to hydraulic pressure $P_A$ of the first main pipeline 35A to the controller 25. A second pressure detector 52 is disposed in the second main pipeline 35B. The second pressure detector 52 is a pressure sensor that detects a hydraulic pressure (pressure) of the second main pipeline 35B. The second pressure detector 52 outputs a detection signal corresponding to hydraulic pressure $P_B$ of the second main pipeline 35B to the controller 25.

A third pressure detector 53 is disposed in the first clutch 27C. The third pressure detector 53 is a pressure sensor that detects a clutch pressure (pressure) of the first clutch 27C. The third pressure detector 53 outputs a detection signal corresponding to a clutch pressure $P_C$ of the first clutch 27C to the controller 25. An operation amount detector 8C (refer to Fig. 1) is disposed in the accelerator pedal 8A. The operation amount detector 8C is an operation amount detection sensor that detects an operation amount $\theta 1$ of the accelerator pedal 8A. The operation amount detector 8C outputs a detection signal corresponding to the operation amount $\theta 1$ of the accelerator pedal 8A to the controller 25. In addition, an output value (capacity $\theta 2$) of a capacity sensor (not shown) of the first hydraulic pump and motor 33 and an output value (capacity $\theta 3$) of a capacity sensor (not shown) of the second hydraulic pump and motor 34 are inputted to the controller 25.

As shown in Fig. 7, a command (command signal $C_1$) from the controller 25 is inputted to the first clutch 27C. Engagement and disengagement of the first clutch 27C are controlled based upon the command (command signal $C_1$) from the controller 25. A command (command signal $C_2$) from the controller 25 is inputted to the second clutch 36. Engagement and disengagement of the second clutch 36 are controlled based upon the command (command signal $C_2$) from the controller 25. A command (command signal $C_3$) from the controller 25 is inputted to the third clutch 37. Engagement and disengagement of the third clutch 37 are controlled based upon the command (command signal $C_3$) from the controller 25.

Next, an explanation will be made of the planetary gear mechanism 29. In Fig. 3 and Fig. 7, the planetary gear mechanism 29 is shown in a box (rectangular frame). The planetary gear mechanism 29 is provided with three members (rotation members) of a first member linked to the engine 9 as a power source, a second member linked to the first variator 33 and a third member linked to the idler element 28 on the output shaft 23-side. In the first embodiment, the planetary gear mechanism 29 is configured of a carrier and two sun gears (first sun gear and second sun gear).

Table 3 described below shows a combination of the configuration elements (the carrier, the first sun gear and the second sun gear) in the planetary gear mechanism 29.

[Table 3]

| No. | First member linked to power source | Second member linked to first variator | Third member linked to idler element | Number of Figure |
|---|---|---|---|---|
| 1-A | carrier | first sun gear | second sun gear | Fig. 4 (first embodiment) Fig. 16 (fourth modification example) |
| 1-B | first sun gear | carrier | second sun gear | Fig. 14 (second modification example) |
| 1-C | first sun gear | second sun gear | carrier | Fig. 15 (third modification example) |

As shown in Fig. 4, Fig. 5 and Fig. 8, in the first embodiment (that is, No. 1-A in Table 3) the planetary gear mechanism 29 is provided with the carrier 29A corresponding to the first member, the first sun gear 29B corresponding to the second member, the second sun gear 29C corresponding to the third member, a planet gear 29D and a balance gear 29E. The first sun gear 29B, the second sun gear 29C, the planet gear 29D and the balance gear 29E do not necessarily require the power transmission by the meshing of gears but may perform the power transmission by friction of rollers (an

EP 4 782 725 A1

outer peripheral surface thereof), for example.

The engine 9 is connected via the first connecting member 30 to the carrier 29A. The first sun gear 29B is connected via the second connecting member 31 to the first variator 33. The second sun gear 29C is connected via the third connecting member 32 to the idler element 28 (first idler gear 28B). The first sun gear 29B is meshed with the planet gear 29D. The second sun gear 29C is meshed with the balance gear 29E. The balance gear 29E is meshed with the planet gear 29D.

A rotating axis Sp (Fig. 8) of the planet gear 29D and a rotating axis Sb (Fig. 8) of the balance gear 29E are supported on the carrier 29A. Therefore, the planet gear 29D and the balance gear 29E revolve about a center axis S (Fig. 8) of the planetary gear mechanism 29 and rotate on its own axis. The planet gear 29D is provided with a gear part 29D1 meshing with the first sun gear 29B and a gear part 29D2 meshing with the balance gear 29E.

According to the first embodiment, the balance gear 29E is disposed between the second sun gear 29C and the planet gear 29D but may be disposed between the first sun gear 29B and the planet gear 29D. In addition, the balance gear 29E may be disposed both between the second sun gear 29C and the planet gear 29D and between the first sun gear 29B and the planet gear 29D or may not be disposed in both thereof.

Fig. 8 is a cross section showing the planetary gear mechanism 29 as viewed from the power source side. The carrier 29A, the first sun gear 29B and the second sun gear 29C are concentrically arranged. That is, the center axis S (rotation center axis) of each of the carrier 29A, the first sun gear 29B and the second sun gear 29C is in agreement therewith. The first sun gear 29B is meshed with the gear part 29D1 of the planet gear 29D. The second sun gear 29C is meshed with the balance gear 29E. The balance gear 29E is meshed with the gear part 29D2 of the planet gear 29D. The balance gear 29E and the planet gear 29D rotate freely in a rotating direction by the carrier 29A and are restricted in a revolving direction in relation to the center axis S in such a way that the meshing of the respective gears establishes. Therefore, the planet gear 29D rotates about the rotating axis Sp as the center axis of the planet gear 29D and revolves about the center axis S of the carrier 29A. Therefore, a trace Cp of the center axis (rotating axis Sp) of the planet gear 29D becomes a circle about the center axis S of the carrier 29A. The balance gear 29E rotates about the rotating axis Sb as the center axis of the balance gear 29E and revolves about the center axis S of the carrier 29A. Therefore, a trace Cb of the center axis (rotating axis Sb) of the balance gear 29E becomes a circle about the center axis S of the carrier 29A.

A meshing radius rs1 of the first sun gear 29B is a meshing radius of the first sun gear 29B-side at the time the first sun gear 29B is meshed with the planet gear 29D. A meshing radius rp1 of the gear part 29D1 of the planet gear 29D is a meshing radius of the gear part 29D1-side at the time the first sun gear 29B is meshed with the planet gear 29D. A meshing radius rs2 of the second sun gear 29C is a meshing radius of the second sun gear 29C-side at the time the second sun gear 29C is meshed with the balance gear 29E. A meshing radius rp2 of the gear part 29D2 of the planet gear 29D is a meshing radius of the planet part 29D-side at the time the balance gear 29E is meshed with the planet gear 29D.

In the first embodiment (No. 1-A in Table 3), since the carrier 29A is connected to a member (terminal) linked to the engine 9, that is, the first connecting member 30, torque Tc of the carrier 29A is torque that the engine 9 can generate. Since the first sun gear 29B is connected to a member (terminal) linked to the first variator 33, that is, the second connecting member 31, torque Ts1 of the first sun gear 29B is torque that the first variator 33 can generate. Since the second sun gear 29C is connected to a member (terminal) linked to the idler element 28, that is, the third connecting member 32, torque Ts2 of the second sun gear 29C is a torque reaction that receives from the first idler gear 28B.

A ratio of the torque Ts1 of the first sun gear 29B, the torque Ts2 of the second sun gear 29C and the torque Tc of the carrier 29A is invariable during the time when the planetary stepless speed-changing mechanism 24 is transmitting the power. The controller 25 outputs a signal for controlling the first variator 33 based upon this principle, and controls the torque of the second connecting member 31 (for example, the first sun gear 29B) linked to the first variator 33. That is, the controller 25 controls the torque of the second connecting member 31 (for example, the first sun gear 29B) by controlling the first variator 33. Thereby, the controller 25 indirectly controls the torque of the first connecting member 30 (for example, the carrier 29A) linked to the engine 9 and the torque of the third connecting member 32 (for example, the second sun gear 29C) linked to the idler element 28. As a result, the transmission torque can be controlled between the first connecting member 30 (for example, the carrier 29A) linked to the engine 9 and the third connecting member 32 (for example, the second sun gear 29C) linked to the idler element 28.

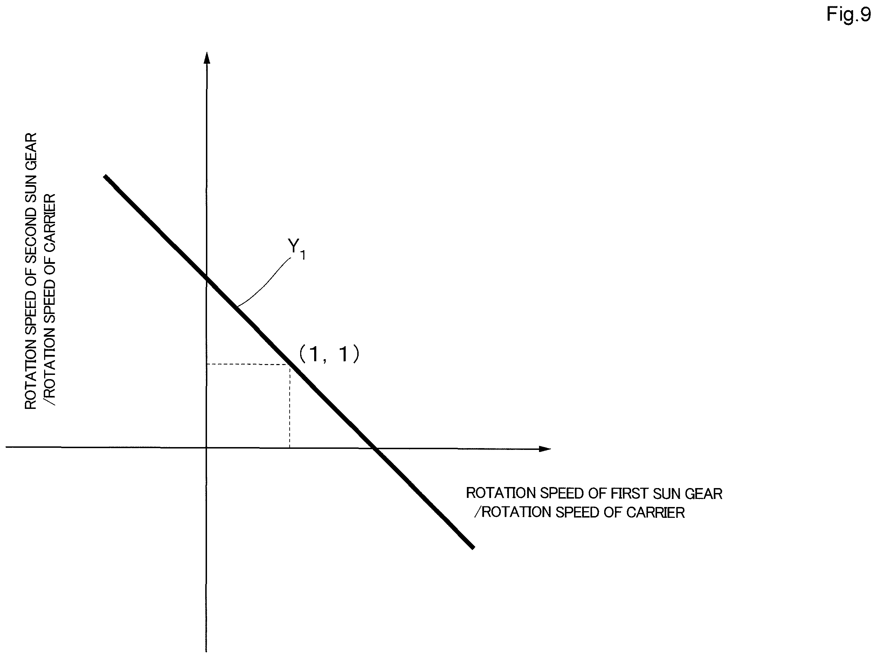

Fig. 9 shows a relation of rotation speeds of the planetary gear mechanism 29. It is assumed that the rotation speed of the carrier 29A is constant. In this case, when the rotation speed of the second sun gear 29C is made high, the rotation speed of the first sun gear 29B is made low. In contrast, when the rotation speed of the second sun gear 29C is made low, the rotation speed of the first sun gear 29B is made high. The controller 25 outputs a signal for controlling the first variator 33 based upon this principle and controls the rotation speed of the second connecting member 31 (for example, the first sun gear 29B) linked to the first variator 33. That is, the controller 25 controls the rotation speed of the second connecting member 31 (for example, the first sun gear 29B) by controlling the first variator 33. Thereby, the controller 25 indirectly controls the rotation speed of the first connecting member 30 (for example, the carrier 29A) linked to the engine 9 and the rotation speed of the third connecting member 32 (for example, the second sun gear 29C) linked to the idler element 28. As a result, the speed change ratio can be controlled between the first connecting member 30 (for example, the carrier 29A) linked to the engine 9 and the third connecting member 32 (for example, the second sun gear 29C) linked to the idler element 28.

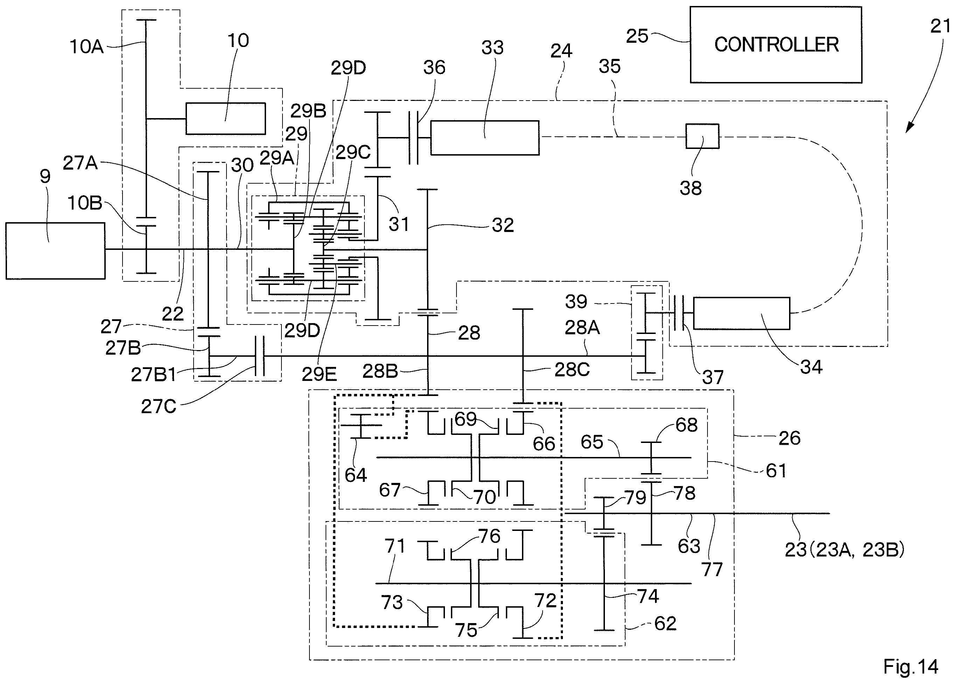

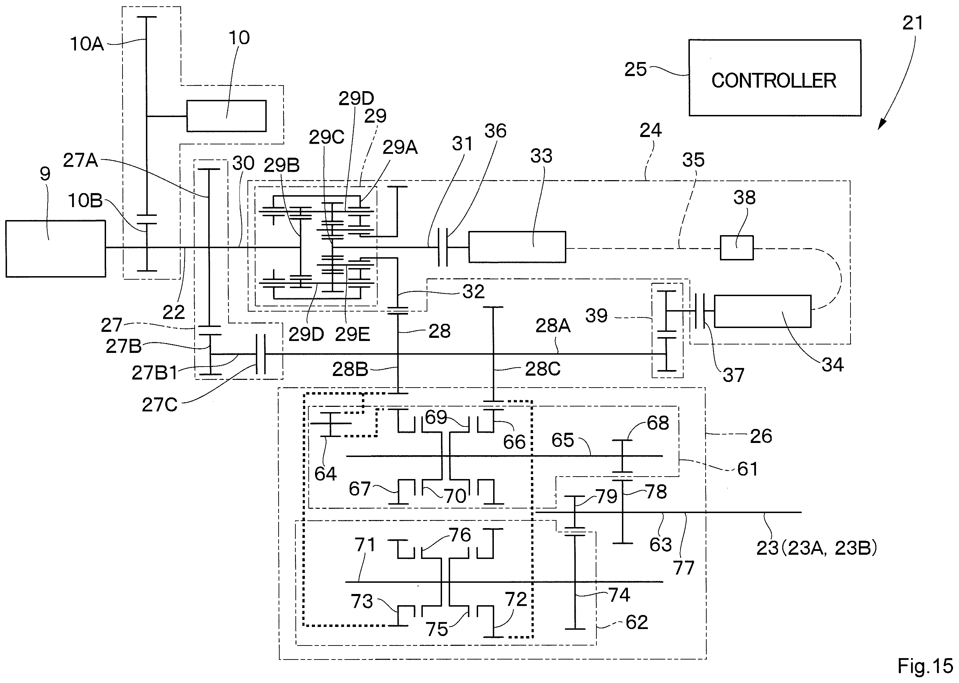

When "the rotation speed of the second sun gear/the rotation speed of the carrier" is 0, the rotation speed of the second sun gear 29C is 0. Since the second sun gear 29C is linked via the third connecting member 32, the idler element 28 and the multistage speed-changing mechanism 26 to the output shaft 23, in a case where the second sun gear 29C is $0min^{-1}$, the vehicle speed is 0km/h. That is, a speed change ratio of the planetary stepless speed-changing mechanism 24 is limitless. It should be noted that, as shown in a second modification example (that is, No. 1-B in Table 3) in Fig. 14, the planetary gear mechanism 29 may cause the first sun gear 29B to be connected to the first connecting member 30 as a member linked to the engine 9, the carrier 29A to be connected to the second connecting member 31 as a member linked to the first variator 33 and the second sun gear 29C to be connected to the third connecting member 32 as a member linked to the idler element 28. In addition, as shown in a third modification example (that is, No. 1-C in Table 3) in Fig. 15, the planetary gear mechanism 29 may cause the first sun gear 29B to be connected to the first connecting member 30, the second sun gear 29C to be connected to the second connecting member 31 and the carrier 29A to be connected to the third connecting member 32.

Next, an explanation will be made of the internal lockup operation of the planetary stepless speed-changed mechanism 24. A transmission efficiency of power between the planetary gear mechanism 29 and the idler element 28 is defined as described below. The transmission efficiency of the power transmission route via the third connecting member 32 is higher than the transmission efficiency of the power transmission route via the second connecting member 31, the first variator 33, the transmission element 35, the second variator 34, the third clutch 37 and the transmission 39. Therefore, for enhancing the transmission efficiency, the rotation of the second connecting member 31 linked to the first variator 33 has only to be stopped, not performing the power transmission between the first variator 33 and the second variator 34. In this case, the power supplied to the planetary gear mechanism 29 via the first connecting member 30 from the engine 9 is not distributed to the second connecting member 31 linked to the first variator 33, all of which is transmitted to the third connecting member 32 linked to the idler element 28.

For causing the planetary stepless speed-changing mechanism 24 to be in a state of the internal lockup, the rotation of the second connecting member 31 linked to the first variator 33 out of the three connecting members 30, 31, 32 linked to the planetary gear mechanism 29 has only to be stopped. In a case where the first variator 33 and the second variator 34 are the hydraulic pump and motor, the controller 25 holds a volume of the hydraulic pump and motor of the first variator 33 to a predetermined value or more (preferably 10% or more of the maximum volume) and controls a volume of the hydraulic pump and motor of the second variator 34 to 0.

In addition, the internal lockup state may be realized by fixing the rotation shaft of the first variator 33 to a non-rotation part to stop the rotation of the first variator 33. For example, as the first modification example as shown in Fig. 13, the internal lockup state may be realized by fixing the second connecting member 31 to a non-rotation part (for example, a case of the speed-changing device 21) by the brake mechanism 55. The brake mechanism 55 may adopt the configuration of fixing the second connecting member 31 linked to the first variator 33 to the non-rotation part by friction joint or mechanical meshing joint. Particularly in a case where the first variator 33 is an electric generator, it is preferable to fix the second connecting member 31 to the non-rotation part by the brake mechanism 55 from a point of view of power losses.

In a case of the speed-changing device 21 where the internal lockup operation and the external lockup operation of the planetary stepless speed-changing mechanism 24 can be performed, at the starting-up and at the excavating, the power transmission is performed by causing the planetary stepless speed-changing mechanism 24 to be continuously changed in a speed. At the transporting and at the deadheading, the power transmission is performed by causing the planetary stepless speed-changing mechanism 24 to be in the internal lockup or the power transmission is performed by an external lockup mechanism (direct joint mechanism 27). Thereby, at the starting-up and at the excavating (vehicle speed 0km/h to 7km/h) when the stepless speed change is necessary, the power transmission efficiency can be enhanced by the stepless speed change of the planetary stepless speed-changing mechanism 24. On the other hand, at the transporting and at the deadheading (vehicle speed 7km/h or higher) when the stepless speed change is not necessary, the power transmission efficiency can be enhanced by causing the planetary stepless speed-changing mechanism 24 to be in the internal lockup or by transmitting the power with the external lockup mechanism (direct joint mechanism 27), which is higher than that of the stepless speed change.

Next, an explanation will be made of the direct joint mechanism 27 as the external lockup mechanism with reference to Fig. 3 and Fig. 4. The direct joint mechanism 27 transmits the power supplied from the engine 9 to the idler gear 28B by the meshing of gears with each other not via the planetary stepless speed-changing mechanism 24. The direct joint mechanism 27 is provided with the input gear 27A disposed in the input shaft 22, a lockup gear 27B meshing with the input gear 27A, and the first clutch 27C. A rotation shaft 27B1 in which the lockup gear 27B is disposed is connected via the first clutch 27C to the idler shaft 28A of the idler element 28.

The first clutch 27C is disposed between the input shaft 22 (more specifically, the rotation shaft 27B1) and the idler shaft 28A. The first clutch 27C is configured of, for example, a clutch (friction plates) by friction joint, a dog clutch or a dog clutch with synchromesh. The first clutch 27C performs mechanical engagement (connection) and disengagement between the lockup gear 27B (rotation shaft 27B1) and the idler element 28B (idler shaft 28A). The second clutch 36 is disengaged and the first clutch 27C is engaged, whereby the power inputted from the input shaft 22 is transmitted via the input gear 27A, the lockup gear 27B and the first clutch 27C to the idler element 28 (first idler gear 28B and second idler gear 28C). Thereby, the power supplied from the engine 9 is transmitted via the direct joint mechanism 27 as the external lockup mechanism to the first idler gear 28B and the second idler gear 28C not via the planetary stepless speed-changing mechanism 24.

Here, an external lockup rotation speed ratio Ir is defined according to Equation 1 as described below. It should be noted that the number of teeth of the input gear 27A is indicated by "N27A" and the number of teeth of the lockup gear 27B is indicated by "N27B".

[Equation 1]

$$Ir = N27A/N27B$$

In a case of the speed-changing device 21 that is provided with the external lockup mechanism (direct joint mechanism 27) and performs the internal lockup operation, it is preferable that the external lockup rotation speed ratio Ir is equal to or more than the internal lockup output speed change ratio Ip. Preferably, for effectively using the speed change ratio of the planetary stepless speed-changing mechanism 24 more widely, the external lockup rotation speed ratio Ir is made larger than the internal lockup output speed change ratio Ip. As a result, a range of speed multiplication of the planetary stepless speed-changing mechanism 24 can be used more widely and effectively. The internal lockup output speed change ratio Ip is defined according to Equation 2 as described below. In this case, the number of teeth of the third connecting member 32 linked to the first idler gear 28B is indicated by "N32", the number of teeth of the first idler gear 28B is indicated by "N28B" and the internal lockup speed change ratio is indicated by "In".

[Equation 2]

$$Ip = In \times (\frac{N32}{N28})$$

The speed-changing device 21 that is provided with the external lockup mechanism (direct joint mechanism 27) and performs the internal lockup operation can perform the power transmission as follows, for example. At the starting-up and at the excavating (vehicle speed 0km/h to 7km/h) when the stepless speed change is necessary, the power transmission is performed while performing a stepless speed change via the planetary stepless speed-changing mechanism 24. At the transporting and at the deadheading (vehicle speed 7km/h or more) when the stepless speed change is not necessary, the power transmission is performed while executing the internal lockup via the planetary stepless speed-changing mechanism 24. At the transporting and at the deadheading (vehicle speed 10km/h or more) when the stepless speed change is not necessary, the power transmission is performed via the external lockup mechanism (direct joint mechanism 27). Thereby, the speed-changing device 21 can select a power transmission route that is the highest in the power transmission efficiency at all the operations of the excavating, the starting-up, the transporting and the deadheading.

Next, an explanation will be made of the multistage speed-changing mechanism 26. The multistage speed-changing mechanism 26 is a speed-changing mechanism that changes in a speed by the meshing of gears, the switching of clutches and the switching of a brake. The multistage speed-changing mechanism 26 corresponds to, for example, a planetary transmission, a countershaft type transmission, a manual transmission, an automated manual transmission, a dual clutch transmission and the like. In the first embodiment, the multistage speed-changing mechanism 26 is configured of the countershaft type transmission with forward three-speeds and backward one-speed.

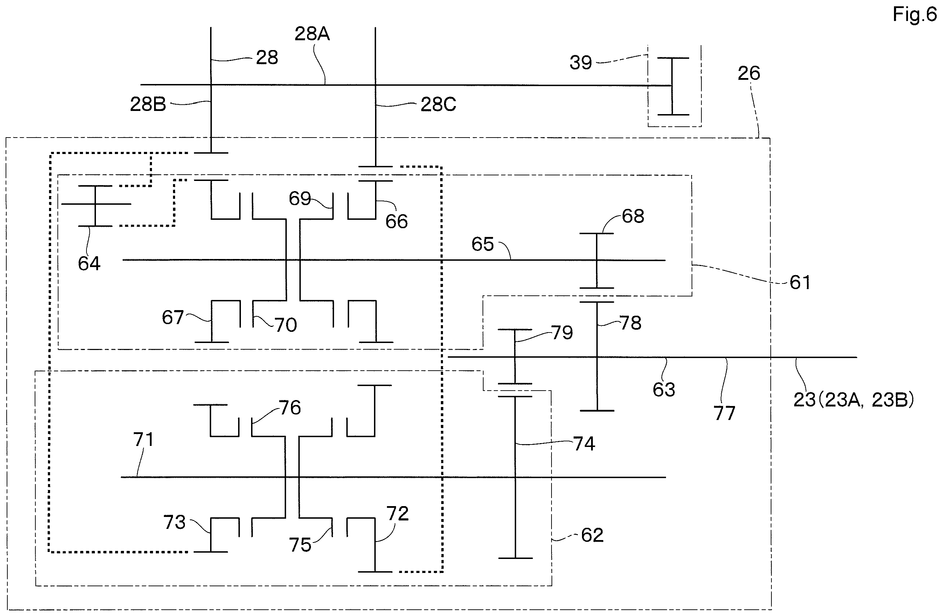

An explanation will be made of the multistage speed-changing mechanism 26 as the countershaft type transmission with reference to Fig. 6. The multistage speed-changing mechanism 26 is provided with a low range shaft unit 61, a high range shaft unit 62, an output shaft unit 63 and a counter gear 64. The low range shaft unit 61 includes a low range shaft 65, a forward one-speed gear 66, a backward one-speed gear 67, a low range gear 68, a forward one-speed clutch 69 and a backward one-speed clutch 70. The high range shaft unit 62 includes a high range shaft 71, a forward two-speed gear 72, a forward three-speed gear 73, a high range gear 74, a forward two-speed clutch 75 and a forward three-speed clutch 76. The counter gear 64 is a gear for reversing a rotation direction of an output shaft 77 in the output shaft unit 63. The output shaft unit 63 includes the output shaft 77, a low range output gear 78 and a high range output gear 79. The output shaft 77 in the output shaft unit 63 (that is, the output shaft 77 in the multistage speed-changing mechanism 26) corresponds to the output shaft 23 in the speed-changing device 21.

The backward one-speed gear 67 is always meshed with the first idler gear 28B via the counter gear 64 and rotates together with the first idler gear 28B. The forward three-speed gear 73 is always meshed with the first idler gear 28B and rotates together with the first idler gear 28B. The forward one-speed gear 66 is always meshed with the second idler gear 28C and rotates together with the second idler gear 28C. The forward two-speed gear 72 is always meshed with the second idler gear 28C and rotates together with the second idler gear 28C.

The backward one-speed clutch 70 performs engagement (connection) and disengagement of the backward one-speed gear 67 and the low range shaft 65. The backward one-speed gear 67 and the low range shaft 65 are engaged by the backward one-speed clutch 70, whereby the power transmission between the first idler gear 28B and the low range shaft 65 is made possible. The forward one-speed clutch 69 performs engagement (connection) and disengagement of the forward one-speed gear 66 and the low range shaft 65. The forward one-speed gear 66 and the low range shaft 65 are engaged by the forward one-speed clutch 69, whereby the power transmission between the second idler gear 28C and the low range shaft 65 is made possible.

The forward two-speed clutch 75 performs engagement (connection) and disengagement of the forward two-speed gear 72 and the high range shaft 71. The forward two-speed gear 72 and the high range shaft 71 are engaged by the forward two-speed clutch 75, whereby the power transmission between the second idler gear 28C and the high range shaft 71 is made possible. The forward three-speed clutch 76 performs engagement (connection) and disengagement of the forward three-speed gear 73 and the high range shaft 71. The forward three-speed gear 73 and the high range shaft 71 are engaged by the forward three-speed clutch 76, whereby the power transmission between the first idler gear 28B and the high range shaft 71 is made possible.

The low range gear 68 in the low range shaft unit 61 is always meshed with the low range output gear 78 in the output shaft unit 63, and the low range shaft 65 and the output shaft 77 rotate together. In addition, the high range gear 74 in the high range shaft unit 62 is always meshed with the high range output gear 79 in the output shaft unit 63, and the high range shaft 71 and the output shaft 77 rotate together.

That is, when the backward one-speed gear 67 and the low range shaft 65 are engaged (connected) by the backward one-speed clutch 70, the first idler gear 28B, the counter gear 64, the backward one-speed gear 67, the backward one-speed clutch 70, the low range shaft 65, the low range gear 68, the low range output gear 78 and the output shaft 77 rotate together. Because of this, it is possible to transmit the power transmitted to the idler element 28 (idler shaft 28A and first idler gear 28B) via the planetary stepless speed-changing mechanism 24 and the direct joint mechanism 27 to the output shaft 77.

When the forward one-speed gear 66 and the low range shaft 65 are engaged (connected) by the forward one-speed clutch 69, the second idler gear 28C, the forward one-speed gear 66, the forward one-speed clutch 69, the low range shaft 65, the low range gear 68, the low range output gear 78 and the output shaft 77 rotate together. Because of this, it is possible to transmit the power transmitted to the idler element 28 (idler shaft 28A and second idler gear 28C) via the planetary stepless speed-changing mechanism 24 or the direct joint mechanism 27 to the output shaft 77.

When the forward two-speed gear 72 and the high range shaft 71 are engaged (connected) by the forward two-speed clutch 75, the second idler gear 28C, the forward two-speed gear 72, the forward two-speed clutch 75, the high range shaft 71, the high range gear 74, the high range output gear 79 and the output shaft 77 rotate together. Because of this, it is possible to transmit the power transmitted to the idler element 28 (idler shaft 28A and second idler gear 28C) via the planetary stepless speed-changing mechanism 24 or the direct joint mechanism 27 to the output shaft 77.

When the forward three-speed gear 73 and the high range shaft 71 are engaged (connected) by the forward three-speed clutch 76, the first idler gear 28B, the forward three-speed gear 73, the forward three-speed clutch 76, the high range shaft 71, the high range gear 74, the high range output gear 79 and the output shaft 77 rotate together. Because of this, it is possible to transmit the power transmitted to the idler element 28 (idler shaft 28A and first idler gear 28B) via the planetary stepless speed-changing mechanism 24 or the direct joint mechanism 27 to the output shaft 77. Table 4 described below shows operations (engagement and disengagement) of the respective clutches 69, 70, 75, 76 in the multistage speed-changing mechanism 26.

[Table 4]

| Speed stage of multistage speed-changing mechanism | forward one-speed clutch | forward two-speed clutch | forward three-speed clutch | backward one-speed clutch |
|---|---|---|---|---|
| forward one-speed | engagement | disengagement | disengagement | disengagement |
| forward two-speed | disengagement | engagement | disengagement | disengagement |
| forward three-speed | disengagement | disengagement | engagement | disengagement |
| backward one-speed | disengagement | disengagement | disengagement | engagement |

In the backward one-speed, the backward one-speed clutch 70 is engaged (connected), and the forward one-speed clutch 69, the forward two-speed clutch 75 and the forward three-speed clutch 76 are disengaged. In the forward one-speed, the forward one-speed clutch 69 is engaged (connected), and the backward one-speed clutch 70, the forward two-speed clutch 75 and the forward three-speed clutch 76 are disengaged. In the forward two-speed, the forward two-speed clutch 75 is engaged (connected), and the forward one-speed clutch 69, the backward one-speed clutch 70 and the forward three-speed clutch 76 are disengaged. In the forward three-speed, the forward three-speed clutch 76 is engaged (connected), and the forward one-speed clutch 69, the backward one-speed clutch 70 and the forward two-speed clutch 75 are disengaged.

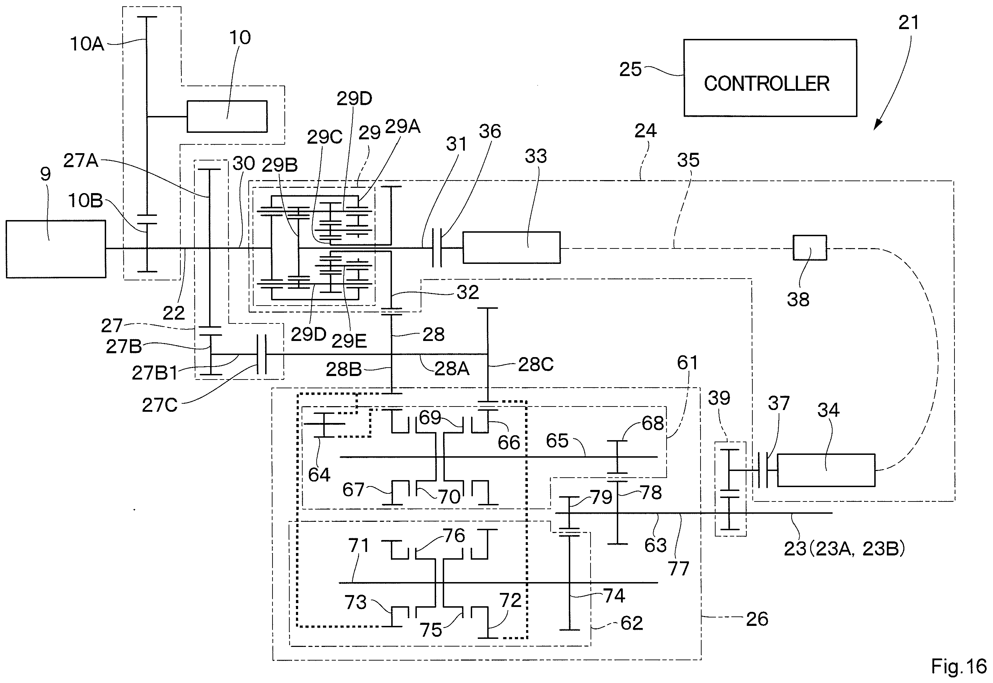

It should be noted that in the embodiment, the second variator 33 is connected via the third clutch 37 and the transmission 39 to the idler element 28 (idler shaft 28A). On the other hand, as shown in the fourth modification example in Fig. 16, the second variator 34 may be connected via the third clutch 37 and the transmission 39 to the output shaft 77 in the multistage speed-changing mechanism 26 (output shaft 23 in the speed-changing device 21).

Incidentally, there will be considered a case of adopting an engine that is an internal combustion engine as a power source in a vehicle. In this case, it is difficult to cause a rotation shaft of the engine to perform a reverse rotation operation. Therefore, for enabling the forward travel and the backward travel of the vehicle, a mechanism is needed for a transmission to switch the rotation of an input shaft to forward rotation and reverse rotation. Since a travel frequency of both the forward travel and the backward travel is high in the wheel loader, it is desired to provide a function for reversing the rotation direction within the transmission.

The function for reversing the rotation direction is considered to be achieved by switching a power transmission route of the forward rotation and a power transmission route of the reverse rotation by a clutch. However, when switching the output shaft of the transmission to the forward rotation and the reverse rotation, there inevitably occurs a state where the output shaft reaches zero rotation. At the moment when the output shaft has reached zero rotation, it is difficult to switch the power transmission route of the forward rotation and the power transmission route of the reverse rotation by the engagement and the disengagement of the clutch.

Therefore, the embodiment is configured so that the switch of the power transmission route of the forward rotation and the power transmission route of the reverse rotation can be smoothly performed by a transmission using a planetary stepless speed-changing mechanism. That is, the embodiment is configured so that the switch of the forward rotation and the reverse rotation of the output shaft 23 in the speed-changing device 21 (transmission), consequently the switch of the forward travel and the reverse travel of the wheel loader 1 (vehicle) can be smoothly performed. Hereinafter, an explanation will be made of the details of these points.

As shown in Fig. 7, the planetary stepless speed-changing mechanism 24 includes the planetary gear mechanism 29 and the hydrostatic stepless speed-changing mechanism 41. The pair of main pipelines 35A, 35B in the hydrostatic stepless speed-changing mechanism 41 are connected by the connecting pipeline 44. The first variable relief valve 38A, the second variable relief valve 38B, the first check valve 47 and the second check valve 48 are arranged in the connecting pipeline 44. Each setting pressure of the variable relief valves 38A, 38B (relief setting pressure, that is, relief start pressure) is controlled based upon command signals (command signals $W_A$, $W_B$) from the controller 25. The variable relief valves 38A, 38B correspond to communicating valves that can switch the communicating state and the blocking state between the pair of main pipelines 35A, 35B.

The controller 25 can cause the state of the variable relief valves 38A, 38B to be the blocking state, that is, the blocking state of blocking between the pair of main pipelines 35A, 35B by increasing each setting pressure of the variable relief valves 38A, 38B. The controller 25 can cause the state of the variable relief valves 38A, 38B to be the communicating state, that is, the communicating state of communicating between the pair of main pipelines 35A, 35B by decreasing the setting pressure of the variable relief valves 38A, 38B.

Each relief pressure of the variable relief valves 38A, 38B is usually set to a predetermined value at the high-pressure side (for example, from 35Mpa to 50Mpa). That is, in a case of transmitting the power via the planetary stepless speed-changing mechanism 24, the controller 25 sets each relief pressure of the variable relief valves 38A, 38B to a predetermined value at the high-pressure side (for example, from 35Mpa to 50Mpa). At this time, the operating fluid from the first hydraulic pump and motor 33 via the first main pipeline 35A toward the second hydraulic pump and motor 34, the operating fluid from the first hydraulic pump and motor 33 via the second main pipeline 35B toward the second hydraulic pump and motor 34, the operating fluid from the second hydraulic pump and motor 34 via the first main pipeline 35A toward the first hydraulic pump and motor 33 and the operating fluid from the second hydraulic pump and motor 34 via the second main pipeline 35B toward the first hydraulic pump and motor 33 can be sent without being bypassed in the middle by the connecting pipeline 44. As a result, the power transmission is made possible alternately between the first hydraulic pump and motor 33 and the second hydraulic pump and motor 34.

In addition, for example, when the pressure in the first main pipeline 35A is a high pressure (for example, 40MPa or more) equal to or more than a predetermined pressure and exceeds a relief pressure (a predetermined value at the high pressure side) of the first variable relief valve 38A, the operating fluid in the first main pipeline 35A flows via the connecting pipeline 44, the first variable relief valve 38A and the second check valve 48 to the second main pipeline 35B. When the pressure in the second main pipeline 35B is a high pressure (for example, 40MPa or more) equal to or more than a predetermined pressure and exceeds a relief pressure (a predetermined value at the high pressure side) of the second variable relief valve 38B, the operating fluid in the second main pipeline 35B flows via the connecting pipeline 44, the second variable relief valve 38B and the first check valve 47 to the first main pipeline 35A. As a result, the first hydraulic pump and motor 33 and the second hydraulic pump and motor 34 can be prevented from being damaged due to the pressure of the operating fluid being excessively high.

On the other hand, when the controller 25 causes the variable relief valves 38A, 38B to be in the communicating state (that is, when the communication between the pair of main pipelines 35A, 35B is established), the power transmission due to the hydraulic pressure in the hydrostatic stepless speed-changing mechanism 41 can be blocked. For example, the controller 25 can cause the operating fluid in the first main pipeline 35A to flow via the connecting pipeline 44, a first bypass pipeline 45, the first variable relief valve 38A, the connecting pipeline 44 and the second check valve 48 to the second main pipeline 35B by decreasing the relief pressure in the first variable relief valve 38A. Because of this, the operating fluid fed from the first hydraulic pump and motor 33 to the first main pipeline 35A bypasses the second hydraulic pump and motor 34 and is back to the first hydraulic pump and motor 33. As a result, the first hydraulic pump and motor 33 cannot transmit the power via the first main pipeline 35A to the second hydraulic pump and motor 34. Similarly, the operating fluid fed from the second hydraulic pump and motor 34 to the first main pipeline 35A bypasses the first hydraulic pump and motor 33 and is back to the second hydraulic pump and motor 34. As a result, the second hydraulic pump and motor 34 cannot transmit the power via the first main pipeline 35A to the first hydraulic pump and motor 33.

In addition, the controller 25 can cause the operating fluid in the second main pipeline 35B to flow via the connecting pipeline 44, a second bypass pipeline 46, the second variable relief valve 38B, the connecting pipeline 44 and the first check valve 47 to the first main pipeline 35A by decreasing the relief pressure in the second variable relief valve 38B. Because of this, the operating fluid fed from the first hydraulic pump and motor 33 to the second main pipeline 35B bypasses the second hydraulic pump and motor 34 and is back to the first hydraulic pump and motor 33. As a result, the first hydraulic pump and motor 33 cannot transmit the power via the second main pipeline 35B to the second hydraulic pump and motor 34. Similarly, the operating fluid fed from the second hydraulic pump and motor 34 to the second main pipeline 35B bypasses the first hydraulic pump and motor 33 and is back to the second hydraulic pump and motor 34. As a result, the second hydraulic pump and motor 34 cannot transmit the power via the second main pipeline 35B to the first hydraulic pump and motor 33.

In addition, for example, the controller can bypass the operating fluid in both directions between the first main pipeline 35A and the second main pipeline 35B by decreasing both the relief pressure of the first variable relief valve 38A and the relief pressure of the second variable relief valve 38B. In this case, the power cannot be transmitted in both directions between the first hydraulic pump and motor 33 and the second hydraulic pump and motor 34. It should be noted that it is not necessary to arrange both the first variable relief valve 38A and the second variable relief valve 38B, only one of them is disposed and the other is not required to be disposed. In addition, the first variable relief valve 38A and the second variable relief valve 38B each are not required to be configured of an electromagnetic relief valve, one of them is configured of an electromagnetic valve and the other may be configured of a relief valve of which a relief pressure is fixed (a fixed relief valve).

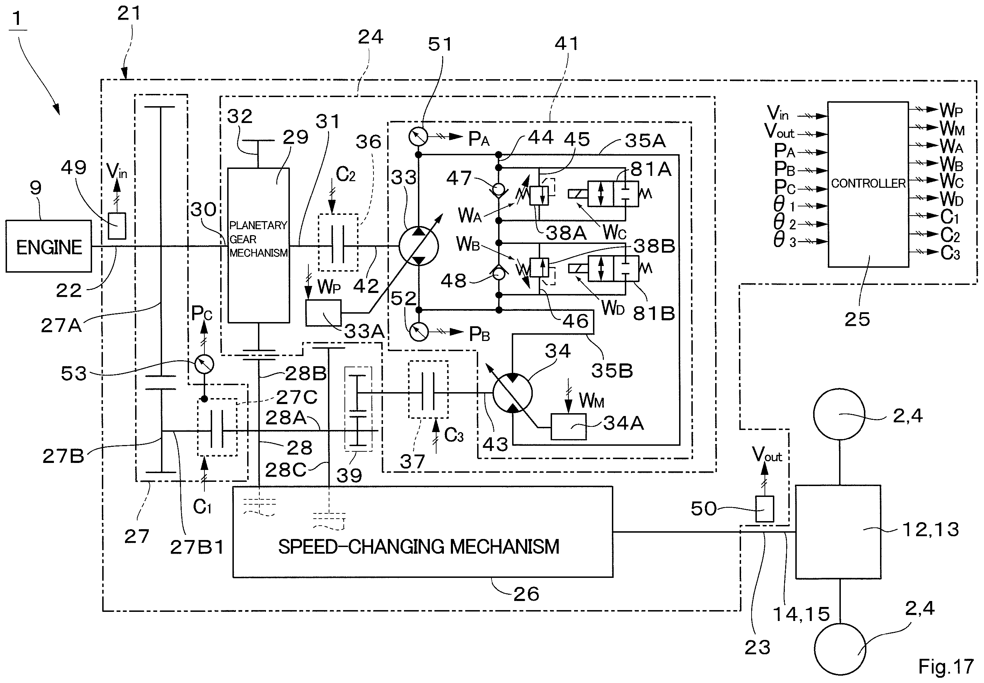

The hydrostatic stepless speed-changing mechanism 41 as shown in Fig. 7 uses the variable relief valves 38A, 38B as means of blocking the power transmission caused by the hydraulic pressure in the hydrostatic stepless speed-changing mechanism 41. On the other hand, as a fifth modification example as shown in Fig. 17, a first opening/closing valve 81A may be disposed parallel to the first variable relief valve 38A and a second opening/closing valve 81B may be disposed parallel to the second variable relief valve 38B. The first opening/closing valve 81A and the second opening/closing valve 81B switch the communicating state and the blocking state between the pair of main pipelines 35A, 35B. That is, in the fifth modification example as shown in Fig. 17, the first opening/closing valve 81A and the second opening/closing valve 81B switching the communicating state and the blocking state between the pair of main pipelines 35A, 35B are arranged between the pair of main pipelines 35A, 35B. The opening/closing valves 81A, 81B correspond to communicating valves that can switch the communicating state and the blocking state between the pair of main pipelines 35A, 35B.

That is, the first opening/closing valve 81A and the second opening/closing valve 81B can be switched to an opening position corresponding to the communicating state and a closing position corresponding to the blocking state. The switching between the first opening/closing valve 81A and the second opening/closing valve 81B is controlled based upon commands (command signal Wc, command signal Wd) from the controller 25. That is, the opening/closing valves 81A, 81B each are configured of an electric opening/closing valve (for example, an electromagnetic valve) that opens/closes based upon a command (command signal Wc, Wd) from the controller 25. In a case of this configuration, the communicating state between the pair of main pipelines 35A, 35B caused by decreasing the relief setting pressure of the first variable relief valve 38A can be achieved by opening the first opening/closing valve 81A. In addition, the communicating state between the pair of main pipelines 35A, 35B caused by decreasing the relief setting pressure of the second variable relief valve 38B can be achieved by opening the second opening/closing valve 81B.

That is, in the fifth modification example as shown in Fig. 17, the first opening/closing valve 81A is opened and the second opening/closing valve 81B is opened to establish the communicating state between the pair of main pipelines 35A, 35B, whereby it is possible to block the power transmission due to the hydraulic pressure in the hydrostatic stepless speed-changing mechanism 41. It should be noted that in a case of arranging the first opening/closing valve 81A and the second opening/closing valve 81B, the first variable relief valve 38A and the second variable relief valve 38B each may be changed to a relief valve of which a relief pressure is fixed (fixed relief valve). In addition, it is not necessary to arrange both of the first opening/closing valve 81A and the second opening/closing valve 81B and only one of them may be disposed.

Here, as shown in Fig. 3 and Fig. 4, the controller 25, at the time of switching the speed-changing device 21 from the forward rotation mode (forward mode) to the reverse rotation mode (backward mode), switches the forward one-speed clutch 69 as a first output clutch from the engagement state to the disengagement state and switches the backward one-speed clutch 70 as a second output clutch from the disengagement state to the engagement state. At this time, the controller 25 starts the switch of the forward one-speed clutch 69 and starts the switch of the backward one-speed clutch 70 in a state where the rotation of the output shaft 23 is a forward rotation, that is, in a state where the output shaft 23 rotates in a forward rotation direction (in the forward direction). That is, the controller 25 starts the switch from the engagement state to the disengagement state of the forward one-speed clutch 69 and starts the switch from the disengagement state to the engagement state of the backward one-speed clutch 70 in a state where the rotation of the output shaft 23 is the forward rotation.

In addition, the controller 25, at the time of switching the speed-changing device 21 from the reverse rotation mode (backward mode) to the forward rotation mode (forward mode), switches the backward one-speed clutch 70 from the engagement state to the disengagement state and switches the forward one-speed clutch 69 from the disengagement state to the engagement state. At this time, the controller 25 starts the switch of the backward one-speed clutch 70 and starts the switch of the forward one-speed clutch 69 in a state where the rotation of the output shaft 23 is the reverse rotation, that is, in a state where the output shaft 23 rotates in the reverse rotation direction (in the backward direction). That is, the controller 25 starts the switch from the engagement state to the disengagement state of the backward one-speed clutch 70 and starts the switch from the disengagement state to the engagement state of the forward one-speed clutch 69 in a state where the rotation of the output shaft 23 is the reverse rotation.

In this way, when the switch from the forward rotation mode to the reverse rotation mode is performed and when the switch from the reverse rotation mode to the forward rotation mode is performed, the rotation of the output side (the second sun gear 29C as the third member and the third connecting member 32) of the planetary stepless speed-changing mechanism 24 is reversed temporarily. Hereinafter, an explanation will be made of the switch from the forward rotation mode to the reverse rotation mode and the switch from the reverse rotation mode to the forward rotation mode.

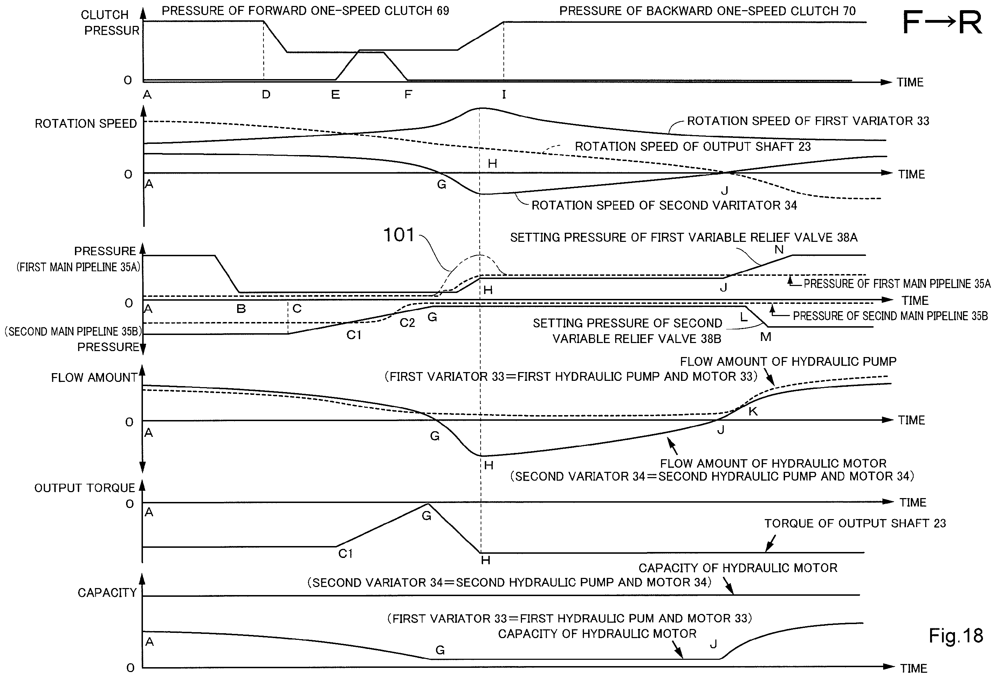

First, an explanation will be made of the switch from the forward rotation mode to the reverse rotation mode with reference to Fig. 18. Fig. 18 shows an example of a change over time in a pressure (clutch pressure) of each of the forward one-speed clutch 69 and the backward one-speed clutch 70, in a rotation speed of each of the first hydraulic pump and motor 33 (first variator), the second hydraulic pump and motor 34 (second variator) and the output shaft 23, in a pressure of each of the main pipelines 35A, 35B, in a setting pressure of the variable relief valves 38A, 38B, in a flow quantity of each of the first hydraulic pump and motor 33 and the second hydraulic pump and motor 34, in toque (output torque) of the output shaft 23 and in a capacity of each of the first hydraulic pump and motor 33 and the second hydraulic pump and motor 34 at the time of switching from the forward rotation mode to the reverse rotation mode. At time A in Fig. 18, the wheel loader 1 as a vehicle travels in the forward one-speed stepless speed change. In addition, the controller 25 is going to switch from the forward one-speed stepless speed change to the backward one-speed stepless speed change. The power is transmitted from the output shaft 23 to the engine 9 as a power source for reducing the speed of the wheel loader 1 between time A and time B in Fig. 18. At this time, the controller 25 engages the forward one-speed clutch 69.

In addition, the controller 25 controls the capacity of the second hydraulic pump and motor 34 as a fluid-pressure motor (hydraulic motor) to the maximum and controls the capacity of the first hydraulic pump and motor 33 as a fluid-pressure motor (hydraulic motor) in such a manner that a flow quantity of the first hydraulic pump and motor 33 is made slightly smaller than a discharge flow quantity of the second hydraulic pump and motor 34. Because of this, the power flows from the second hydraulic pump and motor 34 to the first hydraulic pump and motor 33. That is, the fluid (operating oil) discharged from the second hydraulic pump and motor 34 flows through the second main pipeline 35B toward the first hydraulic pump and motor 33 and returns through the first main pipeline 35A back to the second hydraulic pump and motor 34. At this time, the pressure of the second main pipeline 35B is higher than that of the first main pipeline 35A.

From time B to time G, the controller 25 decreases the relief pressure (relief setting pressure) of the first variable relief valve 38A from the pressure of approximately 30 to 45MPa to the pressure of approximately 2.5 to 15MPa. Because of this, even when the rotation direction of the first hydraulic pump and motor 33 and the second hydraulic pump and motor 34 is reversed, the preparation for suppressing a surge pressure of the first main pipeline 35A from occurring is completed.

From time C to time G, the controller 25 decreases the relief pressure of the second variable relief valve 38B from the pressure of approximately 10 to 35MPa to the pressure of approximately 2.5 to 15MPa. Because of this, the torque of the first hydraulic pump and motor 33 is limited and the limit to a capacity of torque to be able to transmit the power from the idler element 28 to the engine 9 starts. At this time, the controller 25 decreases the pressure of the forward one-speed clutch 69 from time D to time F. Because of this, a capacity of the transmissive torque of the forward one-speed clutch 69 is decreased. In a case where the capacity of the transmissive torque of the forward one-speed clutch 69 surpasses a capacity of torque for the idler element 28 to be able to transmit the power to the engine 9, the second variable relief valve 38B performs the relief operation (between C1 and C2 in Fig.18).

The reason for decreasing the relief pressure of the second variable relief valve 38B is to prevent the surge pressure and rapid variations of the transmission torque. The pressure of the forward one-speed clutch 69 starts to decrease from time D and decreases to zero at time F. After time F, the forward one-speed clutch 69 is completely disengaged. On the other hand, the pressure of the backward one-speed clutch 70 is increased from time E to time I. At time G in the middle of from time E to time I, the rotation direction of the second hydraulic pump and motor 34 is reversed. On the other hand, the rotation speed of the output shaft 23 continues to be in the forward direction. That is, from time G to time H, the backward one-speed clutch 70 performs the power transmission between the input side of the backward one-speed clutch 70 (backward one-speed gear 67) and the output side of the backward one-speed clutch 70 (low range shaft 65) while generating slip in a state where the rotation direction differs.

This slip decreases as the pressure of the backward one-speed clutch 70 increases and disappears at time H. When the rotation direction of the output side (the second sun gear 29C as the third member, the third connecting member 32 and the second hydraulic pump and motor 34) in the planetary stepless speed-changing mechanism 24 is reversed at time G, the surge pressure tends to be generated in the first main pipeline 35A. Since a response to a rapid surge pressure is delayed in the variable relief valves 38A, 38B, the relief pressure of the first variable relief valve 38A is decreased in advance, thereby making it possible to suppress the surge pressure. In Fig. 18, an example of the surge pressure is shown in a dash-double-dot line 101. Since the relief pressure of the first variable relief valve 38A is decreased at time G, it is possible to suppress the surge pressure. In addition, the relief pressure of the first variable relief valve 38A is caused to gradually increase from time G to time H. Because of this, the torque to transmit in a direction in which the rotation direction of the planetary stepless speed-changing mechanism 24 goes from the reverse rotation toward the forward rotation increases, making it possible to decelerate the wheel loader 1 traveling in the forward direction. The first variable relief valve 38A performs the relief operation from time G to time K. Because of this, it is possible to decelerate the wheel loader 1 traveling in the forward direction by the hydrostatic stepless speed-changing mechanism 41 absorbing the power.

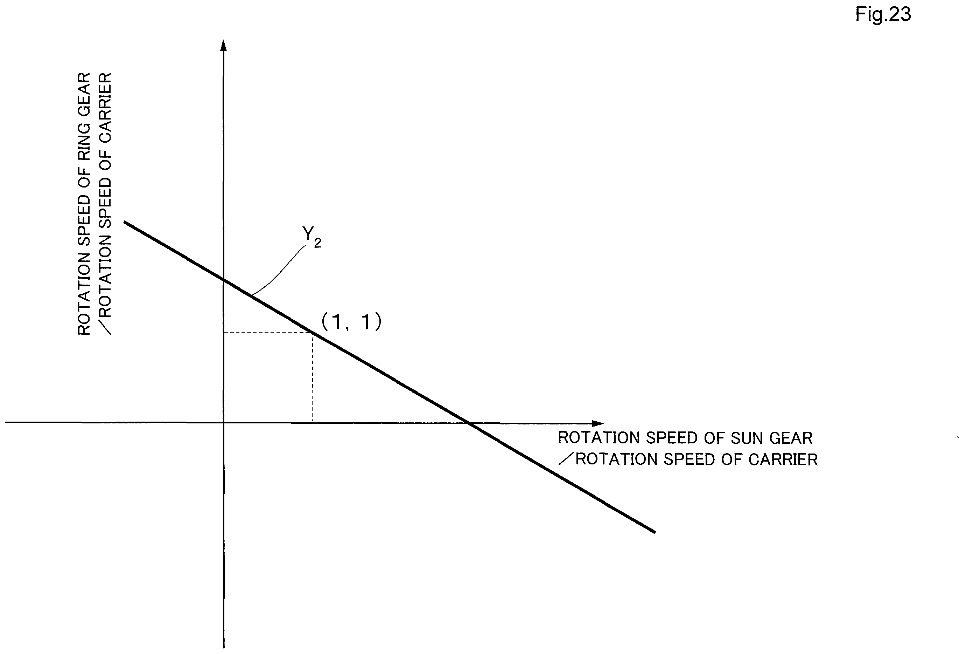

The rotation direction of the planetary stepless speed-changing mechanism 24 is reversed from time G to time J. This, according to the first embodiment, corresponds to a state where the planetary stepless speed-changing mechanism 24 operates along Y1 line in a bottom-right quadrant (the fourth quadrant) or in an upper-left quadrant (the second quadrant) out of four quadrants in Fig. 9. Similarly, this, according to the second embodiment, corresponds to a state where the planetary stepless speed-changing mechanism 24 operates along Y2 line in a bottom-right quadrant (the fourth quadrant) or in an upper-left quadrant (the second quadrant) out of four quadrants in Fig. 23. That is, the output of the planetary stepless speed-changing mechanism 24 is reversed from time G to time J, so that regardless of the backward one-speed clutch 70 engages, the output shaft 23 rotates in the forward direction. After time J, the rotation direction of the planetary stepless speed-changing mechanism 24 is back to the forward rotation and the output shaft 23 starts to rotate in the backward direction.

From time G to time L, torque variations of the output shaft 23 tend to occur and the movement of the wheel loader 1 tends to become large. Therefore, the relief pressure of the second variable relief valve 38B is preferably maintained to a low pressure of approximately 2.5 to 15MPa. The relief pressure of the second variable relief valve 38B is maintained to a high pressure of approximately 10 to 50MPa from time L after the speed change is completed. That is, the relief pressure of the second variable relief valve 38B is increased to a pressure of approximately 40 to 50MPa from time L to time M. Because of this, the speed change from the forward rotation mode to the reverse rotation mode is completed.

During this speed change from the forward rotation mode to the reverse rotation mode, the capacity of the second hydraulic pump and motor 34 is always controlled to the maximum, and on the other hand, the first hydraulic pump and motor 33 requires a change in a capacity thereof. That is, the capacity of the first hydraulic pump and motor 33 is controlled to cause the first hydraulic pump and motor 33 to flow a flow quantity slightly smaller than the discharge flow quantity of the second hydraulic pump and motor 34 from time A to time G. Because of this, the power flows from the second hydraulic pump and motor 34 to the first hydraulic pump and motor 33. That is, the fluid discharged by the forward rotation of the first hydraulic pump and motor 33 goes via the first main pipeline 35A toward the second hydraulic pump and motor 34 and causes the second hydraulic pump and motor 34 to perform a forward rotation. Thereafter, the fluid returns via the second main pipeline 35B back to the first hydraulic pump and motor 33. At this time, the second main pipeline 35B is higher in pressure than the first main pipeline 35A.

The first hydraulic pump and motor 33 is controlled to 0 to 10% of the maximum discharge capacity from time G to time J. The second hydraulic pump and motor 34 performs a reverse rotation to feed fluid (operating oil) to the first main pipeline 35A. The first hydraulic pump and motor 33 performs forward rotation to feed fluid (operating oil) to the first main pipeline 35A. The fluid fed to the first main pipeline 35A flows via the first main pipeline 35A, the connecting pipeline 44, the first variable relief valve 38A and the second check valve 48 to the second main pipeline 35B and is supplied to the first hydraulic pump and motor 33 and the second hydraulic pump and motor 34. At this time, a flow quantity of the fluid flowing in the second check valve 48 is a total value of a flow quantity of the fluid flowing in the first hydraulic pump and motor 33 (first variator) and a flow quantity of the fluid flowing in the second hydraulic pump and motor 34 (second variator) as shown in Fig. 18. It should be noted that the flow quantity of the fluid in Fig. 18 is expressed in positive (+) when both the first hydraulic pump and motor 33 and the second hydraulic pump and motor 34 perform the forward rotation and in negative (-) when both the first hydraulic pump and motor 33 and the second hydraulic pump and motor 34 perform the reverse rotation.

From time J, the capacity of the first hydraulic pump and motor 33 is controlled to cause the first hydraulic pump and motor 33 to flow a flow quantity slightly greater than the discharge flow quantity of the second hydraulic pump and motor 34. Because of this, the power flows from the first hydraulic pump and motor 33 to the second hydraulic pump and motor 34. That is, the fluid discharged by the forward rotation of the first hydraulic pump and motor 33 goes via the first main pipeline 35A toward the second hydraulic pump and motor 34 and causes the second hydraulic pump and motor 34 to perform a forward rotation. Thereafter, the fluid returns via the second main pipeline 35B back to the first hydraulic pump and motor 33. At this time, the first main pipeline 35A is higher in pressure than the second main pipeline 35B.

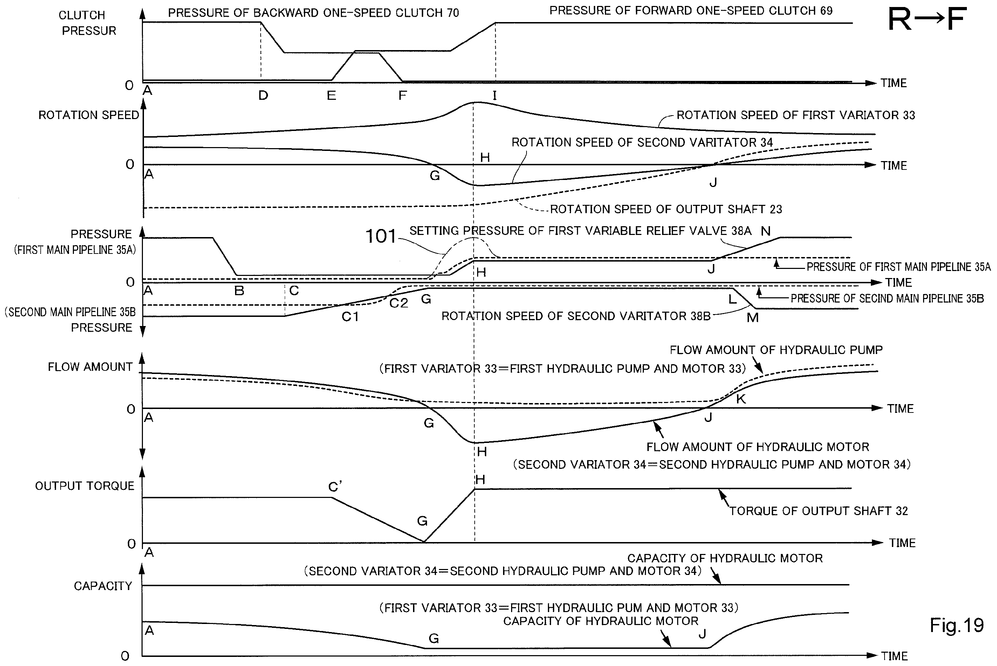

Next, Fig. 19 shows an example of a change over time in a pressure (clutch pressure) of each of the backward one-speed clutch 70 and the forward one-speed clutch 69, in a rotation speed of each of the first hydraulic pump and motor 33 (first variator), the second hydraulic pump and motor 34 (second variator) and the output shaft 23, in a pressure of each of the main pipelines 35A, 35B, in a setting pressure of the variable relief valves 38A, 38B, in a flow quantity of each of the first hydraulic pump and motor 33 and the second hydraulic pump and motor 34, in toque (output torque) of the output shaft 23 and in a capacity of each of the first hydraulic pump and motor 33 and the second hydraulic pump and motor 34 at the switching from the reverse rotation mode to the forward rotation mode. At time A in Fig. 19, the wheel loader 1 as a vehicle travels in the backward one-speed stepless speed change. In addition, the controller 25 is going to switch from the backward one-speed stepless speed change to the forward one-speed stepless speed change. The power is transmitted from the output shaft 23 to the engine 9 as a power source for reducing the speed of the wheel loader 1 between time A and time B in Fig. 19. At this time, the controller 25 engages the backward one-speed clutch 70.

In addition, the controller 25 controls the capacity of the second hydraulic pump and motor 34 as a fluid-pressure motor (hydraulic motor) to the maximum and controls the capacity of the first hydraulic pump and motor 33 as a fluid-pressure motor (hydraulic motor) in such a manner that a flow quantity of the first hydraulic pump and motor 33 is made slightly smaller than a discharge flow quantity of the second hydraulic pump and motor 34. Because of this, the power flows from the second hydraulic pump and motor 34 to the first hydraulic pump and motor 33. That is, the fluid (operating oil) discharged from the second hydraulic pump and motor 34 goes through the second main pipeline 35B toward the first hydraulic pump and motor 33 and returns through the first main pipeline 35A back to the second hydraulic pump and motor 34. At this time, the pressure of the second main pipeline 35B is higher than that of the first main pipeline 35A.

From time B to time G, the controller 25 decreases the relief pressure (relief setting pressure) of the first variable relief valve 38A from the pressure of approximately 30 to 45MPa to the pressure of approximately 2.5 to 15MPa. Because of this, even when the rotation direction of the first hydraulic pump and motor 33 and the second hydraulic pump and motor 34 is reversed, the preparation for suppressing a surge pressure of the first main pipeline 35A from occurring is completed.

From time C to time G, the controller 25 decreases the relief pressure of the second variable relief valve 38B from the pressure of approximately 10 to 35MPa to the pressure of approximately 2.5 to 15MPa. Because of this, the torque of the first hydraulic pump and motor 33 is limited and the limit to a capacity of torque to be able to transmit the power from the idler element 28 to the engine 9 starts. At this time, the controller 25 decreases the pressure of the backward one-speed clutch 70 from time D to time F. Because of this, a capacity of the transmissive torque of the backward one-speed clutch 70 is lowered. In a case where the capacity of the transmissive torque of the backward one-speed clutch 70 surpasses a capacity of torque for the idler element 28 to be able to transmit the power to the engine 9, the second variable relief valve 38B performs the relief operation (between C1 and C2 in Fig. 19).

The reason for decreasing the relief pressure of the second variable relief valve 38B is to prevent the surge pressure and rapid variations of the transmission torque. The pressure of the backward one-speed clutch 70 starts to decrease from time D and decreases to zero at time F. After time F, the backward one-speed clutch 70 is completely disengaged. On the other hand, the pressure of the forward one-speed clutch 69 is increased from time E to time I. At time G in the middle of from time E to time I, the rotation direction of the second hydraulic pump and motor 34 is reversed. On the other hand, the rotation speed of the output shaft 23 continues to be in the backward direction. That is, from time G to time H, the forward one-speed clutch 69 performs the power transmission between the input side of the forward one-speed clutch 69 (forward one-speed gear 66) and the output side of the forward one-speed clutch 69 (low range shaft 65) while generating slip in a state where the rotation direction differs.

This slip decreases as the pressure of the forward one-speed clutch 69 increases and disappears at time H. When the rotation direction of the output side (the second sun gear 29C as the third member, the third connecting member 32 and the second hydraulic pump and motor 34) in the planetary stepless speed-changing mechanism 24 is reversed at time G, the surge pressure tends to be generated in the first main pipeline 35A. Since a response to a rapid surge pressure is delayed in the variable relief valves 38A, 38B, the relief pressure of the first variable relief valve 38A is decreased in advance, thereby making it possible to suppress the surge pressure. In Fig. 19, an example of the surge pressure is shown in a dash-double-dot line 101. Since the relief pressure of the first variable relief valve 38A is decreased at time G, it is possible to suppress the surge pressure. In addition, the relief pressure of the first variable relief valve 38A is caused to gradually increase from time G to time H. Because of this, the torque to transmit in a direction in which the rotation direction of the planetary stepless speed-changing mechanism 24 goes from the reverse rotation toward the forward rotation increases, making it possible to decelerate the wheel loader 1 traveling in the backward direction. The first variable relief valve 38A performs the relief operation from time G to time K. Because of this, it is possible to decelerate the wheel loader 1 traveling in the backward direction by the hydrostatic stepless speed-changing mechanism 41 absorbing the power.

The rotation direction of the planetary stepless speed-changing mechanism 24 is reversed from time G to time J. This, according to the first embodiment, corresponds to a state where the planetary stepless speed-changing mechanism 24 operates along Y1 line in a bottom-right quadrant (the fourth quadrant) or in an upper-left quadrant (the second quadrant) out of four quadrants in Fig. 9. Similarly, this, according to the second embodiment, corresponds to a state where the planetary stepless speed-changing mechanism 24 operates along Y2 line in a bottom-right quadrant (the fourth quadrant) or in an upper-left quadrant (the second quadrant) out of four quadrants in Fig. 23. That is, the output of the planetary stepless speed-changing mechanism 24 is reversed from time G to time J, so that regardless of the forward one-speed clutch 69 engages, the output shaft 23 rotates in the backward direction. After time J, the rotation direction of the planetary stepless speed-changing mechanism 24 is back to the forward rotation and the output shaft 23 starts to rotate in the forward direction.

From time G to time L, torque variations of the output shaft 23 tend to occur and the movement of the wheel loader 1 tends to become large. Therefore, the relief pressure of the second variable relief valve 38B is preferably maintained to a low pressure of approximately 2.5 to 15MPa. The relief pressure of the second variable relief valve 38B is maintained to a high pressure of approximately 10 to 50MPa from time L after the speed change is completed. That is, the relief pressure of the second variable relief valve 38B is increased to a pressure of approximately 40 to 50MPa from time L to time M. Because of this, the speed change from the reverse rotation mode to the forward rotation mode is completed.

During this speed change from the reverse rotation mode to the forward rotation mode, the capacity of the second hydraulic pump and motor 34 is always controlled to the maximum, whereas the first hydraulic pump and motor 33 requires a change in a capacity thereof. That is, the capacity of the first hydraulic pump and motor 33 is controlled to cause the first hydraulic pump and motor 33 to flow a flow quantity slightly smaller than the discharge flow quantity of the second hydraulic pump and motor 34 from time A to time G. Because of this, the power flows from the second hydraulic pump and motor 34 to the first hydraulic pump and motor 33. That is, the fluid discharged by the forward rotation of the first hydraulic pump and motor 33 goes via the first main pipeline 35A toward the second hydraulic pump and motor 34 and causes the second hydraulic pump and motor 34 to perform a forward rotation. Thereafter, the fluid returns via the second main pipeline 35B back to the first hydraulic pump and motor 33. At this time, the second main pipeline 35B is higher in pressure than the first main pipeline 35A.

The first hydraulic pump and motor 33 is controlled to 0 to 10% of the maximum discharge capacity from time G to time J. The first hydraulic pump and motor 33 performs a forward rotation to feed fluid (operating oil) to the first main pipeline 35A. The second hydraulic pump and motor 34 performs a reverse rotation to feed fluid (operating oil) to the first main pipeline 35A. The fluid fed to the first main pipeline 35A flows via the first main pipeline 35A, the connecting pipeline 44, the first variable relief valve 38A and the second check valve 48 to the second main pipeline 35B and is supplied to the first hydraulic pump and motor 33 and the second hydraulic pump and motor 34. At this time, a flow quantity of the fluid flowing in the second check valve 48 is a total value of a flow quantity of the fluid flowing in the first hydraulic pump and motor 33 (first variator) and a flow quantity of the fluid flowing in the second hydraulic pump and motor 34 (second variator) as shown in Fig. 19. It should be noted that the flow quantity of the fluid in Fig. 19 is expressed in positive (+) when both the first hydraulic pump and motor 33 and the second hydraulic pump and motor 34 perform the forward rotation and in negative (-) when both the first hydraulic pump and motor 33 and the second hydraulic pump and motor 34 perform the reverse rotation.

After time J, the capacity of the first hydraulic pump and motor 33 is controlled to cause the first hydraulic pump and motor 33 to flow a flow quantity slightly greater than the discharge flow quantity of the second hydraulic pump and motor 34. Because of this, the power flows from the first hydraulic pump and motor 33 to the second hydraulic pump and motor 34. That is, the fluid discharged by the forward rotation of the first hydraulic pump and motor 33 goes via the first main pipeline 35A toward the second hydraulic pump and motor 34 and causes the second hydraulic pump and motor 34 to perform a forward rotation. Thereafter, the fluid returns via the second main pipeline 35B back to the first hydraulic pump and motor 33. At this time, the first main pipeline 35A is higher in pressure than the second main pipeline 35B.

Next, an explanation will be made of the reason it is preferable to perform the switch of the forward one-speed clutch 69 and the backward one-speed clutch 70 before the rotation speed of the output side (the second sun gear 29C as the third member and the third connecting member 32) of the planetary stepless speed-changing mechanism 24 reaches zero. At the switching of the forward rotation mode and the reverse rotation mode, the start of the switch of the forward one-speed clutch 69 and the backward one-speed clutch 70 is considered as a case of (A), (B) and (C) as follows.

(A) Start when the rotation of the output side (the second sun gear 29C as the third member and the third connecting member 32) of the planetary stepless speed-changing mechanism 24 is in the forward rotation state.

(B) Start after the rotation of the output side (the second sun gear 29C as the third member and the third connecting member 32) of the planetary stepless speed-changing mechanism 24 changes from the forward rotation to the reverse rotation.

(C) Start in a point where the rotation of the output side (the second sun gear 29C as the third member and the third connecting member 32) of the planetary stepless speed-changing mechanism 24 reaches zero.

The above-mentioned (C) is not preferable since, when the responsiveness of the clutch control is not determined to be sufficiently high, pulsation occurs in the torque of the output shaft 23 in the speed-changing device 21, giving discomfort to a passenger. Therefore, it is preferable to start the switch of the forward one-speed clutch 69 and the backward one-speed clutch 70 when the rotation of the output side (the second sun gear 29C as the third member and the third connecting member 32) of the planetary stepless speed-changing mechanism 24 is in the forward rotation state.

Here, it is necessary to increase an allowance rotation speed of the first hydraulic pump and motor 33 for increasing an allowance rotation speed in the reverse rotation state of the output side (the second sun gear 29C as the third member and the third connecting member 32) of the planetary stepless speed-changing mechanism 24. In this case, for preventing the first hydraulic pump and motor 33 from surpassing the allowance rotation speed by changing a gear ratio of the planetary gear mechanism 29, it is necessary to redefine a relation of a rotation speed ratio between the input shaft 22, the first hydraulic pump and motor 33 and the output side (the second sun gear 29C as the third member and the third connecting member 32) of the planetary stepless speed-changing mechanism 24. That is, this leads to changing an inclination of Y1 line in Fig. 9 and an inclination of Y2 line in Fig. 23. When the gear ratio of the planetary gear mechanism 29 is set in a direction of increasing the rotation of the first hydraulic pump and motor 33, more torque to be transmitted from the input shaft 22 to the planetary gear mechanism 29 is transmitted to the output side (the second sun gear 29C as the third member and the third connecting member 32) of the planetary stepless speed-changing mechanism 24 than the first hydraulic pump and motor 33 (the first sun gear 29B as the second member). Because of this, the first hydraulic pump and motor 33 can be downsized.

In addition, a transmission efficiency between the first hydraulic pump and motor 33 and the second hydraulic pump and motor 34 is worse than that from the output side (the second sun gear 29C as the third member and the third connecting member 32) of the planetary stepless speed-changing mechanism 24, to which the power is transmitted via gears, to the output shaft 23 in the speed-changing device 21. For improving the transmission efficiency of the planetary stepless speed-changing mechanism 24, the gear ratio of the planetary gear mechanism 29 is set in a direction of increasing the rotation speed of the first hydraulic pump and motor 33 as long as the rotation speed of the first hydraulic pump and motor 33 is allowable. Therefore, there exists a tradeoff relationship that the transmission efficiency at the forward rotation side has to be sacrificed for increasing the allowance rotation speed in the reverse rotation state of the output side (the second sun gear 29C as the third member and the third connecting member 32) of the planetary stepless speed-changing mechanism 24.

There will be considered a case of starting the switch of the forward one-speed clutch 69 and the backward one-speed clutch 70 after the rotation of the output side (the second sun gear 29C as the third member and the third connecting member 32) of the planetary stepless speed-changing mechanism 24 changes from the forward rotation to the reverse rotation. In this case, in contrast to a case of starting the switch when the rotation of the output side (the second sun gear 29C as the third member and the third connecting member 32) of the planetary stepless speed-changing mechanism 24 is in the forward rotation state, the allowance rotation speed in the reverse rotation state is required to be increased. Therefore, it is preferable to start the switch of the forward one-speed clutch 69 and the backward one-speed clutch 70 when the rotation of the output side (the second sun gear 29C as the third member and the third connecting member 32) of the planetary stepless speed-changing mechanism 24 is in the forward rotation state.

It should be noted that the first hydraulic pump and motor 33 as the first variator and the second hydraulic pump and motor 34 as the second variator each may be configured of an electric machine (electric motor) or a generator (generating motor) in place of a hydraulic pump and motor (fluid-pressure pump or fluid-pressure motor) as a fluid-pressure rotary machine. That is, the first variator and the second variator each may be configured of electric equipment in place of hydraulic equipment. Also in a case where the first variator 33 and the second variator 34 are configured of the electric equipment, with regard to the switch between the forward rotation mode and the reverse rotation mode, it is preferable to start the switch of the forward one-speed clutch 69 and the backward one-speed clutch 70 when the rotation of the output side (the second sun gear 29C as the third member and the third connecting member 32) of the planetary stepless speed-changing mechanism 24 is in the forward rotation state.

As described above, according to the first embodiment, the speed-changing device 21 includes the input shaft 22 (input member), the output shaft 23 (output member), the planetary stepless speed-changing mechanism 24 and the multistage speed-changing mechanism 26. In addition, the speed-changing device 21 includes the idler element 28. The input shaft 22 rotates by the power source (engine 9) mounted on the vehicle (wheel loader 1). The output shaft 23 outputs the rotation to the traveling device (front axle 12 and/or rear axle 13) in the vehicle. The planetary stepless speed-changing mechanism 24 is disposed between the input shaft 22 and the output shaft 23. The planetary stepless speed-changing mechanism 24 changes the rotation of the input shaft 22-side, which is transmitted to the output shaft 23-side. The multistage speed-changing mechanism 26 gradually changes the rotation of the output side of the planetary stepless speed-changing mechanism 24 by switching the transmission route of the meshing of gears. The idler element 28 connects the output side of the planetary stepless speed-changing mechanism 24 to the multistage speed-changing mechanism 26.

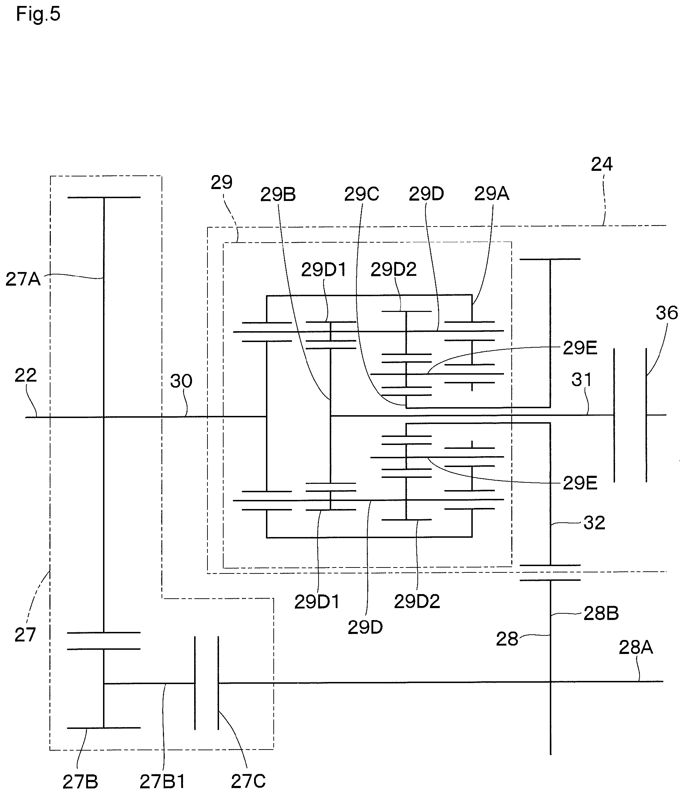

The planetary stepless speed-changing mechanism 24 includes the planetary gear mechanism 29 (planetary mechanism), the first variator 33 (first hydraulic pump and motor 33) and the second variator 34 (second hydraulic pump and motor 34). The planetary gear mechanism 29 includes, for example, as shown in Fig. 4 and in Fig. 5, three members of a carrier 29A (first member) connected to the input shaft 22-side, a first sun gear 29B (second member) as the output side and a second sun gear 29C (third member) as the output side different from the first sun gear 29B. In this case, the carrier 29A (first member) is connected via the first connecting member 30 to the input shaft 22. The first sun gear 29B (second member) is connected via the second connecting member 31 and the second clutch 36 to the first variator 33. The second sun gear 29C (third member) is connected to the idler element 28. That is, the second sun gear 29C (third member) is connected via the third connecting member 32 to the idler element 28 (first idler gear 28B). The first variator 33 is connected to the first sun gear 29B in the planetary gear mechanism 29. The transmission of power is made possible between the second variator 34 and the first variator 33.

The multistage speed-changing mechanism 26 is provided with the forward one-speed transmission route (forward transmission route and forward rotation transmission route) as the first output transmission route and the backward one-speed transmission route (backward transmission route and reverse rotation transmission route) as the second output transmission route. In addition, the multistage speed-changing mechanism 26 is provided with the forward one-speed clutch 69 as a first output clutch and the backward one-speed clutch 70 as a second output clutch. The forward one-speed transmission route is an output transmission route between the idler element 28 (second idler gear 28C) and the output shaft 23, wherein the number of times in the meshing of gears is the odd number of times. Specifically, the forward one-speed transmission route corresponds to the low range shaft unit 61 in a state where the forward one-speed clutch 69 is connected. When a forward one-speed gear 66 and a low range shaft 65 are jointed (engaged) by the forward one-speed clutch 69, the second idler gear 28C, the forward one-speed gear 66, the low range shaft 65, a low range gear 68, a low range output gear 78 and an output shaft 77 (output shaft 23) rotate together. When the forward one-speed clutch 69 is engaged and when the power transmitted to the idler element 28 from the planetary stepless speed-changing mechanism 24 or the direct joint mechanism 27 is transmitted to the output shaft 77 (output shaft 23), the number of times in the meshing of gears becomes the odd number of times.

The backward one-speed transmission route is an output transmission route between the idler element 28 (first idler gear 28B) and the output shaft 23, wherein the number of times in the meshing of gears is the zero number of times or the even number of times. Specifically, the backward one-speed transmission route corresponds to the low range shaft unit 61 in a state where the backward one-speed clutch 70 is connected. When a backward one-speed gear 67 and the low range shaft 65 are jointed (engaged) by the backward one-speed clutch 70, the first idler gear 28B, a counter gear 64, the backward one-speed gear 67, the low range shaft 65, the low range gear 68, the low range output gear 78 and the output shaft 77 (output shaft 23) rotate together. When the backward one-speed clutch 70 is engaged and when the power transmitted to the idler element 28 from the planetary stepless speed-changing mechanism 24 or the direct joint mechanism 27 is transmitted to the output shaft 77 (output shaft 23), the number of times in the meshing of gears becomes the even number of times.

That is, since the backward one-speed transmission route is provided with the counter gear 64, the backward one-speed transmission route differs in the following point from the forward one-speed transmission route. That is, the number of times in the meshing of gears is "the odd number of times" in the forward one-speed transmission route whereas it is "the zero number of times or the even number of times" in the backward one-speed transmission route. Because of this, the rotation direction of the output shaft 23 becomes the reverse direction between the forward one-speed transmission route and the backward one-speed transmission route with each other. It should be noted that a relation between "the odd number of times" and "the zero number of times or the even number of times" may be reversed between the forward one-speed transmission route and the backward one-speed transmission route. That is, the first output transmission route in which the number of times in the meshing of gears is "the odd number of times" may be determined as the backward one-speed transmission route (the backward transmission route and the reverse rotation transmission route) and the second output transmission route in which the number of times in the meshing of gears is "the zero number of times or the even number of times" may be determined as the forward one-speed transmission route (the forward transmission route and the forward rotation transmission route).

The forward one-speed clutch 69 is disposed in the forward one-speed transmission route (low range shaft unit 61). The forward one-speed clutch 69 switches transmission and release of the power in the forward one-speed transmission route. That is, the forward one-speed clutch 69 switches joint (engagement) and release between the forward one-speed gear 66 and the low range shaft 65. The backward one-speed clutch 70 is disposed in the backward one-speed transmission route (low range shaft unit 61). The backward one-speed clutch 70 switches transmission and release of the power in the backward one-speed transmission route. That is, the backward one-speed clutch 70 switches joint (engagement) and release between the backward one-speed gear 67 and the low range shaft 65.

In addition, the speed-changing device 21 is provided with the controller 25. The controller 25 controls the engagement and the disengagement of the forward one-speed clutch 69. In addition, the controller 25 controls the engagement and the disengagement of the backward one-speed clutch 70. The controller 25 switches between the forward rotation mode (state of the forward one-speed stepless speed change) and the reverse rotation mode (state of the backward one-speed stepless speed change), thereby making it possible to reverse the traveling direction of the wheel loader 1 as the vehicle. The controller 25 engages the forward one-speed clutch 69 and disengages the backward one-speed clutch 70 to provide the forward rotation mode (state of the forward one-speed stepless speed change). The controller 25 disengages the forward one-speed clutch 69 and engages the backward one-speed clutch 70 to provide the reverse rotation mode (state of the backward one-speed stepless speed change).

The controller 25, at the time of switching from the forward rotation mode to the reverse rotation mode, starts the switch from the engagement state to the disengagement state of the forward one-speed clutch 69 and starts the switch from the disengagement state to the engagement state of the backward one-speed clutch 70 when the rotation of the output shaft 23 is in the forward rotation state (forward state). That is, the controller 25, at the time of switching from the forward rotation mode to the reverse rotation mode, switches the forward one-speed clutch 69 from the engagement state to the disengagement state and switches the backward one-speed clutch 70 from the disengagement state to the engagement state when the rotation of the output shaft 23 is in the forward rotation state (forward state). At this time, the controller 25 starts the disengagement (pressure decrease) of the forward one-speed clutch 69, and thereafter starts the engagement (pressure increase) of the backward one-speed clutch 70. Because of these, at the time of switching from the forward rotation mode to the reverse rotation mode, the switch from the forward rotation to the reverse rotation of the output shaft 23, consequently the switch from the forward travel to the backward travel of the wheel loader 1 can be smoothly performed.

In addition, the controller 25, at the time of switching from the reverse rotation mode to the forward rotation mode, starts the switch from the engagement state to the disengagement state of the backward one-speed clutch 70 and starts the switch from the disengagement state to the engagement state of the forward one-speed clutch 69 when the rotation of the output shaft 23 is in the reverse rotation state (backward state). That is, the controller 25, at the time of switching from the reverse rotation mode to the forward rotation mode, switches the backward one-speed clutch 70 from the engagement state to the disengagement state and switches the forward one-speed clutch 69 from the disengagement state to the engagement state when the rotation of the output shaft 23 is in the reverse rotation state (backward state). At this time, the controller 25 starts the disengagement (pressure decrease) of the backward one-speed clutch 70, and thereafter starts the engagement (pressure increase) of the forward one-speed clutch 69. Because of these, at the time of switching from the reverse rotation mode to the forward rotation mode, the switch from the reverse rotation to the forward rotation of the output shaft 23, consequently the switch from the backward travel to the forward travel of the wheel loader 1 can be smoothly performed.

As shown in Fig. 18, the controller 25 changes the rotation speed of the first variator 33 (first hydraulic pump and motor 33) at the switching from the forward rotation mode to the reverse rotation mode to reverse the rotation direction of the output side of the planetary stepless speed-changing mechanism 24, that is, the second sun gear 29C as the third member, consequently the third connecting member 32. Therefore, the reverse of the output side of the planetary stepless speed-changing mechanism 24 can be smoothly performed at the switching from the forward rotation mode to the reverse rotation mode. In addition, as shown in Fig. 19, the controller 25 changes the rotation speed of the first variator 33 (first hydraulic pump and motor 33) at the switching from the reverse rotation mode to the forward rotation mode to reverse the rotation direction of the output side of the planetary stepless speed-changing mechanism 24, that is, the second sun gear 29C as the third member, consequently the third connecting member 32. Therefore, the reverse of the output side of the planetary stepless speed-changing mechanism 24 can be smoothly performed at the switching from the reverse rotation mode to the forward rotation mode.

As shown in Fig. 7, according to the first embodiment, the first variator 33 is configured of a pump and motor as a fluid-pressure rotary machine (hydraulic rotary machine) for performing a pump operation or a motor operation. That is, the first variator 33 is the first hydraulic pump and motor 33 as a fluid-pressure pump (hydraulic pump). In addition, the second variator 34 is configured of a pump and motor as a fluid-pressure rotary machine (hydraulic rotary machine) for performing a pump operation or a motor operation. That is, the second variator 34 is the second hydraulic pump and motor 34 as a fluid-pressure pump (hydraulic pump). The first hydraulic pump and motor 33 and the second hydraulic pump and motor 34 are connected by the pair of main pipelines 35A, 35B. Fluid (operating oil) flows in the pair of main pipelines 35A, 35B. The pair of main pipelines 35A, 35B enable the power transmission between the first hydraulic pump and motor 33 and the second hydraulic pump and motor 34. The first variable relief valve 38A and the second variable relief valve 38B as relief valves are arranged between the pair of main pipelines 35A, 35B to control a state between the main pipelines 35A, 35B to the communicating state and the blocking state. The controller 25 can change a communication start pressure (relief pressure) of the first variable relief valve 38A and the second variable relief valve 38B.

On top of this, the controller 25 decreases a setting value of the communication start pressure of the first variable relief valve 38A prior to start of the switch of the forward one-speed clutch 69 and start of the switch of the backward one-speed clutch 70 at the switching from the forward rotation mode to the reverse rotation mode. In other words, the controller 25 decreases the relief pressure of the first variable relief valve 38A prior to start of the switch from the engagement state to the disengagement state of the forward one-speed clutch 69. That is, as shown in Fig. 18, the controller 25 decreases the relief pressure of the first variable relief valve 38A at time B. Therefore, it is possible to suppress occurrence of the surge pressure of the first main pipeline 35A. Because of this, the switch from the forward rotation mode to the reverse rotation mode can be smoothly performed in this respect as well.

In addition, the controller 25 decreases a setting value of the communication start pressure of the first variable relief valve 38A prior to start of the switch of the backward one-speed clutch 70 and start of the switch of the forward one-speed clutch 69 at the switching from the reverse rotation mode to the forward rotation mode. In other words, the controller 25 decreases the relief pressure of the first variable relief valve 38A prior to start of the switch from the engagement state to the disengagement state of the backward one-speed clutch 70. That is, as shown in Fig. 19, the controller 25 decreases the relief pressure of the first variable relief valve 38A at time B. Therefore, it is possible to suppress occurrence of the surge pressure of the first main pipeline 35A. Because of this, the switch from the reverse rotation mode to the forward rotation mode can be smoothly performed in this respect as well.

In addition, the controller 25 increases the setting value of the communication start pressure of the first variable relief valve 38A in the middle of performing the switch from the engagement state to the disengagement state of the forward one-speed clutch 69 and the switch from the disengagement state to the engagement state of the backward one-speed clutch 70 at the switching from the forward rotation mode to the reverse rotation mode. In other words, the controller 25 increases the relief pressure of the first variable relief valve 38A before the switch from the disengagement state to the engagement state of the backward one-speed clutch 70 after starting the switch from the engagement state to the disengagement of the forward one-speed clutch 69. That is, as shown in Fig. 18, the controller 25 increases the relief pressure of the first variable relief valve 38A from time G to time H. Because of this, the torque transmitting in a direction where the rotation direction of the planetary stepless speed-changing mechanism 24 goes from the reverse rotation to the forward rotation increases, making it possible to decelerate the wheel loader 1 traveling in the forward direction.

In addition, the controller 25 increases the setting value of the communication start pressure of the first variable relief valve 38A in the middle of performing the switch from the engagement state to the disengagement state of the backward one-speed clutch 70 and the switch from the disengagement state to the engagement state of the forward one-speed clutch 69 at the switching from the reverse rotation mode to the forward rotation mode. In other words, the controller 25 increases the relief pressure of the first variable relief valve 38A before the switch from the disengagement state to the engagement state of the forward one-speed clutch 69 after starting the switch from the engagement state to the disengagement state of the backward one-speed clutch 70. That is, as shown in Fig. 19, the controller 25 increases the relief pressure of the first variable relief valve 38A from time G to time H. Because of this, the torque transmitting in a direction where the rotation direction of the planetary stepless speed-changing mechanism 24 goes from the reverse rotation to the forward rotation increases, making it possible to decelerate the wheel loader 1 traveling in the backward direction.

The controller 25 provides time for which the first variable relief valve 38A is communicating during the time for which the rotation direction of the output side (third member) in the planetary stepless speed-changing mechanism 24 is reversed by changing the rotation speed of the first variator 33 (first hydraulic pump and motor 33) at the switching from the forward rotation mode to the reverse rotation mode. That is, as shown in Fig. 18, the pressure (broken line) of the first main pipeline 35A is higher than the setting pressure (solid line) of the first variable relief valve 38A, and the first variable relief valve 38A is performing the relief operation from time G to time J. Because of this, the power can be absorbed in the hydrostatic stepless speed-changing mechanism 41. Therefore, the switch from the forward rotation mode to the reverse rotation mode can be smoothly performed in this respect as well.

The controller 25 provides time for which the first variable relief valve 38A is communicating during the time for which the rotation direction of the output side (third member) in the planetary stepless speed-changing mechanism 24 is reversed by changing the rotation speed of the first variator 33 (first hydraulic pump and motor 33) at the switching from the reverse rotation mode to the forward rotation mode. That is, as shown in Fig. 19, the pressure (broken line) of the first main pipeline 35A is higher than the setting pressure (solid line) of the first variable relief valve 38A and the first variable relief valve 38A is performing the relief operation from time G to time J. Because of this, the power can be absorbed in the hydrostatic stepless speed-changing mechanism 41. Therefore, the switch from the reverse rotation mode to the forward rotation mode can be smoothly performed in this respect as well.

It should be noted that according to the first embodiment, the first variator is configured of the first hydraulic pump and motor 33, the second variator is configured of the second hydraulic pump and motor 34 and the pair of main pipelines 35A, 35B establish connection therebetween. On the other hand, the first variator and the second variator each may be configured of an electric machine (electric motor and generator, electric motor or electric generator). In this case, the first variator and the second variator are connected by an electrical circuit. An electric machine control device is disposed in the electrical circuit. The electric machine control device controls electrical power of the electrical circuit. Because of this, the first variator and the second variator enable the power transmission via the electrical circuit. In this case also, at the time of switching from the forward rotation mode to the reverse rotation mode, the switch of the forward one-speed clutch 69 (first output clutch) and the backward one-speed clutch 70 (second output clutch) starts when the rotation of the output shaft 23 is in the forward rotation state (forward state). In addition, at the time of switching from the reverse rotation mode to the forward rotation mode, the switch of the backward one-speed clutch 70 (second output clutch) and the forward one-speed clutch 69 (first output clutch) starts when the rotation of the output shaft 23 is in the reverse rotation state (backward state). Because of this, the switch from the forward rotation to the reverse rotation of the output shaft 23, consequently the switch of the forward travel and the backward travel of the wheel loader 1 can be smoothly performed.

In the first embodiment, the switch of the forward one-speed clutch 69 and the backward one-speed clutch 70 starts before the rotation of the output side of the planetary stepless speed-changing mechanism 24 (consequently, the rotation of the output shaft 23) is reversed in both "at the switching from the forward rotation mode to the reverse rotation mode" and "at the switching from the reverse rotation mode to the forward rotation mode". However, the above-mentioned switch is not necessarily performed in both "at the switching from the forward rotation mode to the reverse rotation mode" and "at the switching from the reverse rotation mode to the forward rotation mode". That is, in any one of "at the switching from the forward rotation mode to the reverse rotation mode" and "at the switching from the reverse rotation mode to the forward rotation mode", the switch of the forward one-speed clutch 69 and the backward one-speed clutch 70 may start before the rotation of the output side of the planetary stepless speed-changing mechanism 24 (consequently, the rotation of the output shaft 23) is reversed.

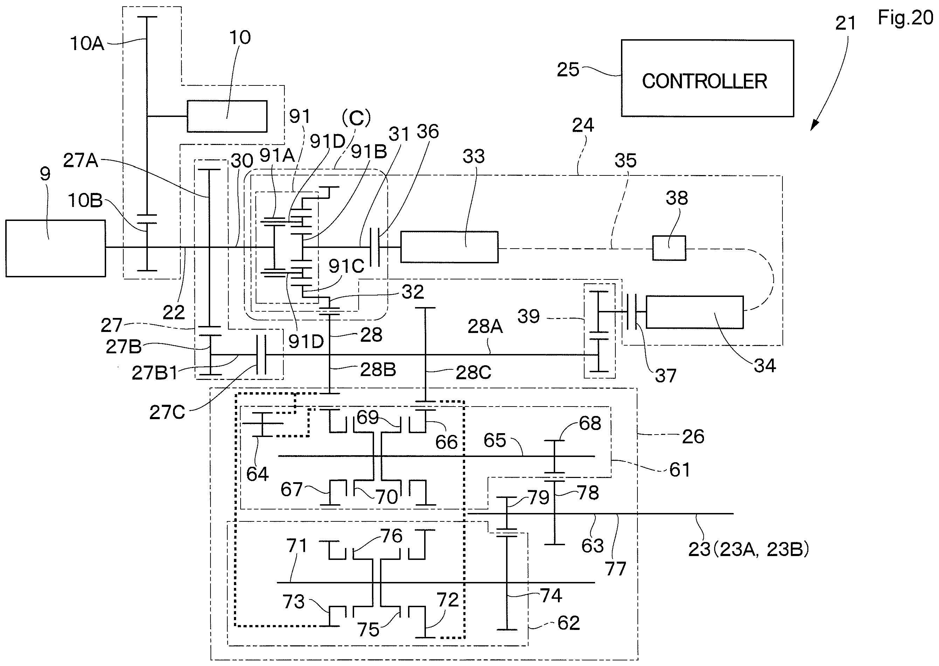

Next, Fig. 20 to Fig. 23 show a second embodiment. The second embodiment is characterized in that a planetary gear mechanism is configured of a carrier, a sun gear and a ring gear. It should be noted that in the second embodiment, components identical to those in the first embodiment are referred to as the identical reference numerals, and an explanation thereof is omitted.

In the first embodiment, the explanation is made by taking as an example a case where the planetary gear mechanism 29 in the planetary stepless speed-changing mechanism 24 is configured of the carrier and the two sun gears. On the other hand, in the second embodiment a planetary gear mechanism 91 in the planetary stepless speed-changing mechanism 24 is configured of a carrier 91A, a sun gear 91B and a ring gear 91C. Table 5 as described below shows a combination of configuration elements (the carrier, the sun gear and the ring gear) of the planetary gear mechanism 91. In any case, the power transmission is made possible. "No. 2-A" in Table 5 is the most preferable from a point of view that the transmission efficiency of the planetary stepless speed-changing mechanism 24 can be improved, the maximum absorption torque of the first variator 33 can be reduced, and the entirety of the planetary stepless speed-changing mechanism 24 can be configured to be downsized and lightweighting.

[Table 5]

| No. | First member linked to power source | Second member linked to first variator | Third member linked to idler element | Number of Figure |
|---|---|---|---|---|
| 2-A | carrier | sun gear | ring gear | Fig. 36 (second embodiment) |
| 2-B | ring gear | carrier | sun gear | Fig. 40 (sixth modification example) |
| 2-C | carrier | ring gear | sun gear | Fig. 41 (seventh modification example) |
| 2-D | ring gear | sun gear | carrier | Omitted in illustration |
| 2-E | sun gear | ring gear | carrier | Omitted in illustration |
| 2-F | sun gear | carrier | ring gear | Omitted in illustration |

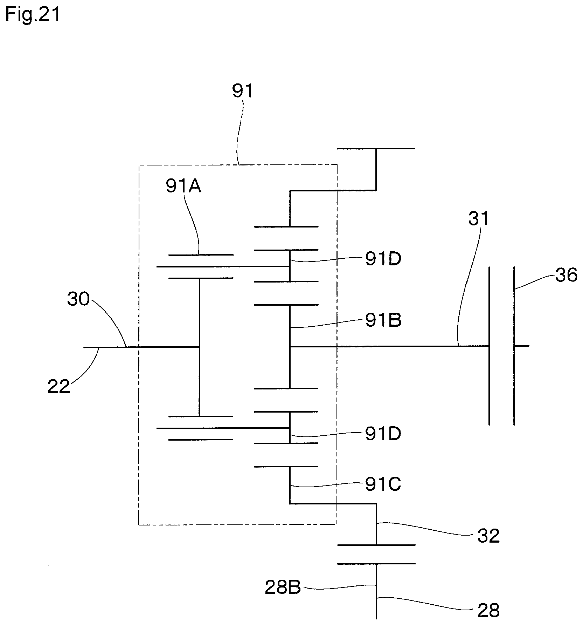

As shown in Fig. 20 and Fig. 21, in the second embodiment (that is, No. 2-A in Table 5) the planetary gear mechanism 91 is provided with the carrier 91A corresponding to a first member, the sun gear 91B corresponding to a second member, the ring gear 91C corresponding to a third member and a planet gear 91D. It should be noted that the power transmission of the sun gear 91B, the ring gear 91C and the planet gear 91D may be performed not by the meshing of gears but by friction of a roller (an outer peripheral surface), for example.

The engine 9 (input shaft 22) is connected via the first connecting member 30 to the carrier 91A. The sun gear 91B is connected via the second connecting member 31 to the first variator 33. The ring gear 91C is connected via the third connecting member 32 to the idler element 28 (first idler gear 28B). The sun gear 91B is meshed with the planet gear 91D.

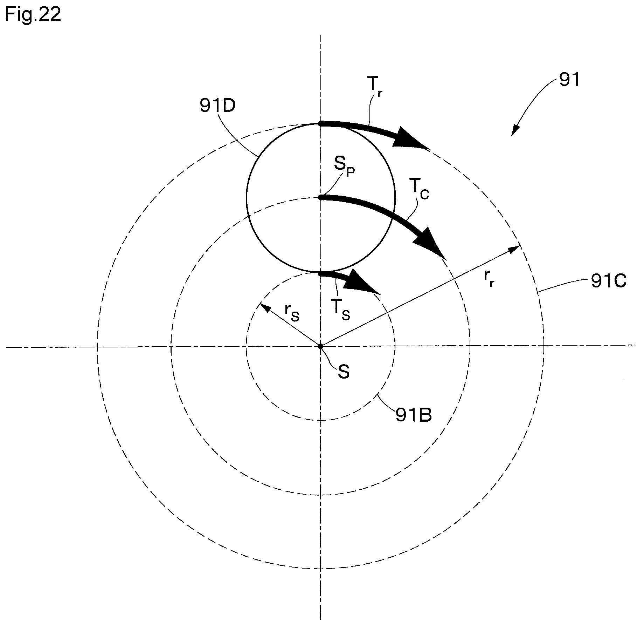

The planet gear 91D is meshed with the ring gear 91C. A rotating axis Sp (Fig. 22) of the planet gear 91D is supported on the carrier 91A. Therefore, the planet gear 91D rotates on its own axis while revolving about a center axis S (Fig. 22) of the planetary gear mechanism 91.

Next, an explanation will be made of an operation of the planetary gear mechanism 91 configured of the carrier 91A, the sun gear 91B and the ring gear 91C. The following is established in all conditions of "No. 2-A", "No. 2-B", "No. 2-C", "No. 2-D", "No. 2-E" and "No. 2-F" in Table 5.

First, an explanation will be made of distribution of torque between three members (the carrier 91A, the sun gear 91B and the ring gear 91C) in the planetary gear mechanism 91. Fig. 22 is a cross section showing the planetary gear mechanism 91 as viewed from the power source side. The carrier 91A, the sun gear 91B and the ring gear 91C are arranged concentrically. That is, the center axes S (rotation center axes) of the carrier 91A, the sun gear 91B and the ring gear 91C are in agreement. The planet gear 91D is arranged to contact an outer periphery of the sun gear 91B and an inner periphery of the ring gear 91C. The planet gear 91D is meshed with the sun gear 91B and the ring gear 91C. The carrier 91A, the sun gear 91B and the ring gear 91C are, for establishing the meshing of the respective gears, supported on a casing of the planetary stepless speed-changing mechanism 24 to be capable of rotating about the center axis S and to be incapable of moving in the other direction. The planet gear 91D is supported on the carrier 91A to be capable of rotating about the rotating axis Sp as the center axis of the planet gear 91D and to be incapable of moving in the other direction. The planet gear 91D rotates about the center axis Sp of the planet gear 91D while revolving about the center axis S of the carrier 91A.

The limiting condition of the planetary gear mechanism 91 lies, as shown in Fig. 22, in that the sun gear 91B, the ring gear 91C and the planet gear 91D are required to be meshed. In addition, for securing the strength of gears, it is necessary to make a diameter of the planet gear 91D large. That is, the limiting condition of the planetary gear mechanism 91 lies in that a meshing radius rs of the sun gear 91B becomes significantly smaller than a meshing radius rr of the ring gear 91C. "No. 2-A" in Table 5 is configured such that the carrier 91A is connected to the first connecting member 30 linked to the engine 9 (power source). Therefore, torque Tc of the carrier 91A is torque that the engine 9 can generate. The sun gear 91B is connected to the second connecting member 31 linked to the first variator 33. Therefore, torque Ts of the sun gear 91B is torque that the first variator 33 can generate. The ring gear 91C is connected to the third connecting member 32 linked to the idler element 28. Therefore, torque Tr of the ring gear 91C is a torque reaction receiving from the first idler gear 28B.

A ratio of the torque Ts of the sun gear 91B, the torque Tr of the ring gear 91C and the torque Tc of the carrier 91A is constant during the time when the planetary stepless speed-changing mechanism 24 is transmitting the power. The controller 25 outputs signals for controlling the first variator 33 based upon this principle and controls the torque of the second connecting member 31 (for example, the sun gear 91B) linked to the first variator 33. That is, the controller 25 controls the torque of the second connecting member 31 (for example, the sun gear 91B) by controlling the first variator 33. Because of this, the controller 25 indirectly controls the torque of the first connecting member 30 (for example, the carrier 91A) linked to the engine 9 and the torque of the third connecting member 32 (for example, the sun gear 91C) linked to the idler element 28. As a result, the transmission torque can be controlled between the first connecting member 30 (for example, the carrier 91A) linked to the engine 9 and the third connecting member 32 (for example, the ring gear 91C) linked to the idler element 28.

Fig. 23 shows a relation of rotation speeds of the planetary gear mechanism 91. There is assumed that the rotation speed of the carrier 91A is constant. In this case, when the rotation speed of the ring gear 91C is made high, the rotation speed of the sun gear 91B is made low. In contrast, when the rotation speed of the ring gear 91C is made low, the rotation speed of the sun gear 91B is made high. The controller 25 outputs signals for controlling the first variator 33 based upon this principle and controls the rotation speed of the second connecting member 31 (for example, the sun gear 91B) linked to the first variator 33. That is, the controller 25 controls the rotation speed of the second connecting member 31 (for example, the sun gear 91B) by controlling the first variator 33. Because of this, the controller 25 indirectly controls the rotation speed of the first connecting member 30 (for example, the carrier 91A) linked to the engine 9 and the rotation speed of the third connecting member 32 (for example, the ring gear 91C) linked to the idler element 28. As a result, the speed change ratio can be controlled between the first connecting member 30 (for example, the carrier 91A) linked to the engine 9 and the third connecting member 32 (for example, the ring gear 91C) linked to the idler element 28.

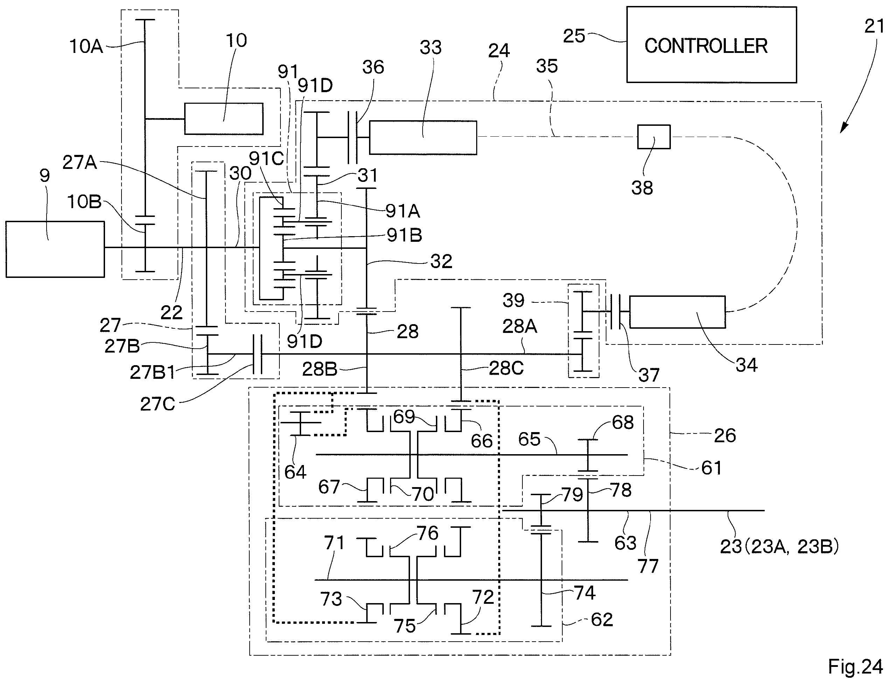

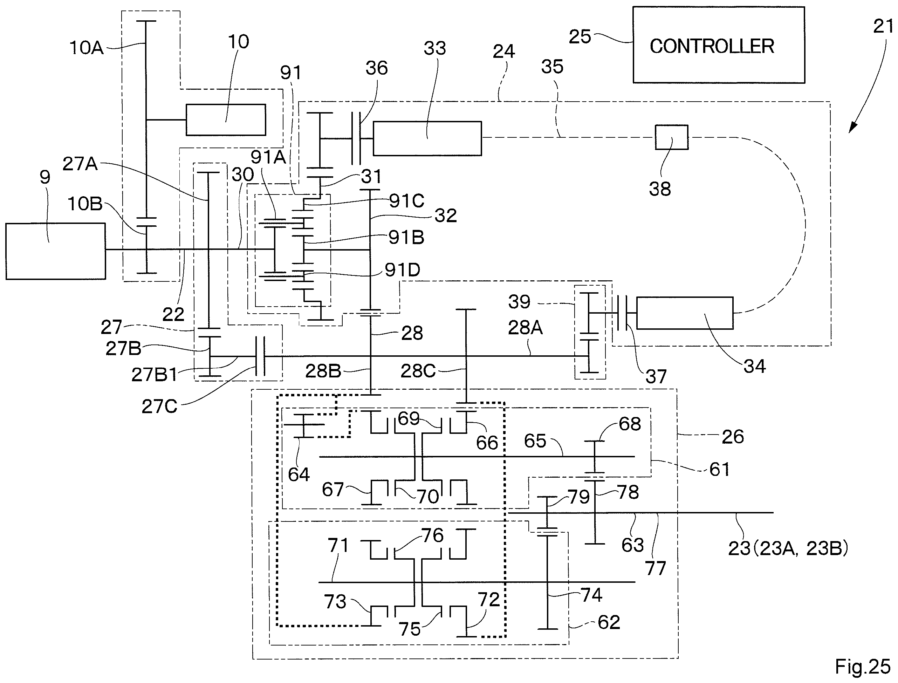

It should be noted that as the sixth modification example (No. 2-B in Table 5) as shown in Fig. 24, the planetary gear mechanism 91 may cause the ring gear 91C to be connected to the first connecting member 30 as a member linked to the engine 9, cause the carrier 91A to be connected to the second connecting member 31 as a member linked to the first variator 33 and cause the sun gear 91B to be connected to the third connecting member 32 as a member linked to the idler element 28. In addition, as the seventh modification example (No. 2-C in Table 5) as shown in Fig. 25, the planetary gear mechanism 91 may cause the carrier 91A to be connected to the first connecting member 30, cause the ring gear 91C to be connected to the second connecting member 31 and cause the sun gear 91B to be connected to the third connecting member 32. Further, although omitted in illustration, the planetary gear mechanism 91 may cause the carrier 91A, the sun gear 91B and the ring gear 91C to be connected to the first connecting member 30, the second connecting member 31 and the third connecting member 32 respectively as shown in "No. 2-D", "No. 2-E" or "No. 2-F" in Table 5.

The second embodiment is provided with the planetary gear mechanism 91 as described above, and a basic operation thereof is not particularly different from that of the first embodiment as described above. That is, in the second embodiment also, as similar to the first embodiment, at the time of switching from the forward rotation mode to the reverse rotation mode, the switch of the forward one-speed clutch 69 (first output clutch) and the backward one-speed clutch 70 (second output clutch) starts in a state where the rotation of the output shaft 23 is the forward rotation state (forward state). In addition, at the time of switching from the reverse rotation mode to the forward rotation mode, the switch of the backward one-speed clutch 70 (second output clutch) and the forward one-speed clutch 69 (first output clutch) starts in a state where the rotation of the output shaft 23 is the reverse rotation state (backward state). Because of this, the switch of the forward rotation and the reverse rotation of the output shaft 23, consequently the switch of the forward travel and the backward travel of the wheel loader 1 can be smoothly performed.

It should be noted that in the first embodiment, the second variator 34 is connected to the idler element 28 (specifically, the idler shaft 28A as a rotation element) disposed between the planetary gear mechanism 29 and the multistage speed-changing mechanism 26. On the other hand, although omitted in illustration, the second variator 34 may be connected to rotation elements arranged between the input shaft 22 (input member) and the power source (engine 9), rotation elements configuring the multistage speed-changing mechanism 26, rotation elements arranged between the multistage speed-changing mechanism 26 and the output shaft 23 (output member), the output shaft 23 (output member) or rotation elements arranged between the output shaft 23 and the traveling device (front axle 12 and rear axle 13).

That is, the first embodiment is configured so that the second variator 34 is connected closer to the output shaft 23 (output member) than the planetary gear mechanism 29, in other words, the second variator 34 is connected between the planetary gear mechanism 29 and the output shaft 23. On the other hand, for example, the second variator 34 may be connected to the input gear 27A in the direct joint mechanism 27 disposed in the input shaft 22 (input member). That is, the second variator 34 may be connected between the planetary gear mechanism 29 and the input shaft 22 (input member). In this way, the second variator 34 may be connected closer to the engine 9 (power source) than the planetary gear mechanism 29. In addition, for example, the second variator 34 may be connected to the lockup gear 27B in the direct connecting mechanism 27. For example, the second variator 34 may be connected to the third connecting member 32. For example, the second variator 34 may be connected to the first idler gear 28B of the idler element 28. The second variator 34 may be connected to the second idler gear 28C of the idler element 28.

For example, the second variator 34 may be connected to the high range gear 74 in the multistage speed-changing mechanism 26. For example, the second variator 34 may be connected to the low range gear 68 in the multistage speed-changing mechanism 26. For example, the second variator 34 may be connected to the high range output gear 79 in the multistage speed-changing mechanism 26. For example, the second variator 34 may be connected to the low range output gear 78 in the multistage speed-changing mechanism 26. For example, the second variator 34 may be connected to the output shaft 77 of the multistage speed-changing mechanism 26 (output shaft 23 in the speed-changing device 21). For example, the second variator 34 may be connected closer to the load side (front axle 12-side and rear axle 13-side) than the output shaft 23 in the speed-changing device 21. For example, the second variator 34 may be connected to the front axle 12, the rear axle 13, the front propeller shaft 14 or the rear propeller shaft 15. The above-mentioned arrangement can be similarly applied to the second embodiment and the respective modification examples.

In the first embodiment the explanation is made by taking the planetary gear mechanism 29 as the planetary mechanism configuring the planetary stepless speed-changing mechanism 24, as an example. That is, in the first embodiment the explanation is made by taking a case where the planetary member in the planetary mechanism is configured of the planetary gear. However, not limited thereto, the planetary member in the planetary mechanism may be configured of a member other than a gear, such as a planetary roller and the like. This arrangement can be similarly applied to the second embodiment and the respective modification examples.

The first embodiment is explained by taking the speed-changing device 21 provided with the multistage speed-changing mechanism 26 and the direct joint mechanism 27, as an example. However, not limited thereto, the multistage speed-changing mechanism 26 and/or the direct joint mechanism 27 may be omitted in the speed-changing device 21 as needed. In addition, the first embodiment is explained by taking a case where the idler element 28 is disposed in the output side of the planetary stepless speed-changing mechanism 24, that is, a case where the output side of the planetary stepless speed-changing mechanism 24 is the idler element 28, as an example. However, the idler element 28 may be omitted. That is, the output side of the planetary stepless speed-changing mechanism (for example, the third member in the planetary mechanism or the third connecting member) may be connected to the multistage speed-changing mechanism without via the idler element. In any case, the multistage speed-changing mechanism is connected to the output side of the planetary stepless speed-changing mechanism (for example, the third member in the planetary mechanism, the third connecting member or the idler element). In addition, the first output clutch in the multistage speed-changing mechanism is disposed in the first output transmission route between the output side of the planetary stepless speed-changing mechanism and the output shaft (the output shaft in the multistage speed-changing mechanism), wherein the number of times in the meshing of gears is the odd number of times for the first output transmission route. In addition, the second output clutch in the multistage speed-changing mechanism is disposed in the second output transmission route between the output side of the planetary stepless speed-changing mechanism and the output shaft (the output shaft in the multistage speed-changing mechanism), wherein the number of times in the meshing of gears is the zero number of times or the even number of times for the second output transmission route. These arrangements can be similarly applied to the second embodiment and the respective modification examples.

The first embodiment is explained by taking a case where the speed-changing device 21 is mounted on the wheel loader 1 as an example. However, not limited thereto, the speed-changing device 21 may be mounted on working vehicles (construction machines) of hydraulic excavators, hydraulic cranes, dump trucks, forklifts and the like other than the wheel loader. In addition, the speed-changing device 21, not limited to the working vehicles, can be applied widely as speed-changing devices incorporated in various vehicles of automobiles, railway vehicles and the like, or various industrial machines and general machinery. This is similarly applied to the second embodiment and the respective modification examples.

In addition, the respective embodiments and the respective modification examples as described above are simply exemplified and without mentioning, a partial replacement and combination of components shown in the different embodiments and in the different modification examples are made possible.

## DESCRIPTION OF REFERENCE NUMERALS

1: WHEEL LOADER (VEHICLE)
9: ENGINE (POWER SOURCE)
12: FRONT AXLE: (TRAVELING DEVICE)
13: REAR AXLE (TRAVELING DEVICE)
21: SPEED-CHANGING DEVICE
22: INPUT SHAFT (INPUT MEMBER)
23, 23A, 23B, 77: OUTPUT SHAFT (OUTPUT MEMBER)
24: PLANETARY STEPLESS SPEED-CHANGING MECHANISM
25: CONTROLLER
26: MULTISTAGE SPEED-CHANGING MECHANISM (SUB SPEED-CHANGING MECHANISM)
28: IDLER ELEMENT
29: PLANETARY GEAR MECHANISM (PLANETARY MECHANISM)
29A: CARRIER (FIRST MEMBER, SECOND MEMBER OR THIRD MEMBER)
29B: FIRST SUN GEAR (FIRST MEMBER, SECOND MEMBER OR THIRD MEMBER)
29C: SECOND SUN GEAR (FIRST MEMBER, SECOND MEMBER OR THIRD MEMBER)
33: FIRST HYDRAULIC PUMP AND MOTOR (FIRST VARIATOR)
34: SECOND HYDRAULIC PUMP AND MOTOR (SECOND VARIATOR)
35A: FIRST MAIN PIPELINE (MAIN PIPELINE)
35B: SECOND MAIN PIPELINE (MAIN PIPELINE)
38A: FFIRST VARIABLE RELIEF VALVE (RELIEF VALVE)
69: FORWARD ONE-SPEED CLUTCH (FIRST OUTPUT CLUTCH)
70: BACKWARD ONE-SPEED CLUTCH (SECOND OUTPUT CLUTCH)
91: PLANETARY GEAR MECHANISM (PLANETARY MECHANISM)
91A: CARRIER (FIRST MEMBER, SECOND MEMBER OR THIRD MEMBER)
91B: SUN GEAR (FIRST MEMBER, SECOND MEMBER OR THIRD MEMBER)
91C: RING GEAR (FIRST MEMBER, SECOND MEMBER OR THIRD MEMBER)

## Claims

1. A speed-changing device comprising:

   an input shaft that is rotated by a power source mounted on a vehicle;
   an output shaft that outputs the rotation to a traveling device in the vehicle;
   a planetary stepless speed-changing mechanism that is disposed between the input shaft and the output shaft to change the rotation of the input shaft side, which is transmitted to the output shaft side; and
   a multistage speed-changing mechanism that gradually changes rotation of an output side of the planetary stepless speed-changing mechanism by switching a transmission route of the meshing of gears, wherein
   the planetary stepless speed-changing mechanism includes:

a planetary mechanism including three members of a first member connected to the input shaft side, a second member as the output side and a third member that is an output side different from the second member;
a first variator connected to the second member in the planetary mechanism; and
a second variator that transmits power between the first variator and the second variator, wherein
the multistage speed-changing mechanism includes:

a first output clutch disposed in a first output transmission route between the output side of the planetary stepless speed-changing mechanism and the output shaft to switch transmission, and release of power of the first output transmission route, wherein the number of times in the meshing of gears is the odd number of times for the first output transmission route; and
a second output clutch disposed in a second output transmission route between the output side of the planetary stepless speed-changing mechanism and the output shaft to switch transmission, and release of power of the second output transmission route, wherein the number of times in the meshing of gears is the zero number of times or the even number of times for the second output transmission route, **characterized by** including:

a controller configured to control engagement/disengagement of the first output clutch and engagement/disengagement of the second output clutch, wherein
the controller switches a forward rotation mode in which the first output clutch is engaged and the second output clutch is disengaged and a reverse rotation mode in which the first output clutch is disengaged and the second output clutch is engaged, whereby a travel direction of the vehicle is reversed, and
the controller, when the rotation of the output shaft is in a forward rotation state at the switching from the forward rotation mode to the reverse rotation mode, starts the switch from an engagement state to a disengagement state of the first output clutch and starts the switch from a disengagement state to an engagement state of the second output clutch, and changes a rotation speed of the first variator, thereby reversing a rotation direction of the third member.

2. A speed-changing device comprising:

an input shaft that is rotated by a power source mounted on a vehicle;
an output shaft that outputs the rotation to a traveling device in the vehicle;
a planetary stepless speed-changing mechanism that is disposed between the input shaft and the output shaft to change the rotation of the input shaft side, which is transmitted to the output shaft side; and
a multistage speed-changing mechanism that gradually changes rotation of an output side of the planetary stepless speed-changing mechanism by switching a transmission route of the meshing of gears, wherein
the planetary stepless speed-changing mechanism includes:

a planetary mechanism including three members of a first member connected to the input shaft side, a second member as the output side and a third member that is an output side different from the second member;
a first variator connected to the second member in the planetary mechanism; and
a second variator that transmits power between the first variator and the second variator, wherein
the multistage speed-changing mechanism includes:

a first output clutch disposed in a first output transmission route between the output side of the planetary stepless speed-changing mechanism and the output shaft to switch transmission, and release of power of the first output transmission route, wherein the number of times in the meshing of gears is the odd number of times for the first output transmission route; and
a second output clutch disposed in a second output transmission route between the output side of the planetary stepless speed-changing mechanism and the output shaft to switch transmission, and release of power of the second output transmission route, wherein the number of times in the meshing of gears is the zero number of times or the even number of times for the second output transmission route, **characterized by** including:

a controller configured to control engagement/disengagement of the first output clutch and engagement/disengagement of the second output clutch, wherein
the controller switches a forward rotation mode in which the first output clutch is engaged and the second output clutch is disengaged and a reverse rotation mode in which the first output clutch is disengaged and the second output clutch is engaged, whereby a travel direction of the vehicle is reversed, and

the controller, when the rotation of the output shaft is in a reverse rotation state at the switching from the reverse rotation mode to the forward rotation mode, starts the switch from an engagement state to a disengagement state of the second output clutch and starts the switch from a disengagement state to an engagement state of the first output clutch, and changes a rotation speed of the first variator, thereby reversing a rotation direction of the third member.

3. The speed-changing device according to claim 1, wherein

the first variator includes a fluid-pressure pump, and
the second variator includes a fluid-pressure motor, wherein the fluid-pressure pump and the fluid-pressure motor are connected by a pair of main pipelines, the pair of main pipelines carrying out power transmission between the fluid-pressure pump and the fluid-pressure motor, further comprising:

a relief valve disposed between the pair of main pipelines to control a state between the pair of main pipelines to be a communicating state and a blocking state,
the controller changes a communication start pressure of the relief valve, and
the controller decreases a setting value of the communication start pressure of the relief valve prior to start of the switch of the first output clutch and start of the switch of the second output clutch at the switching from the forward rotation mode to the reverse rotation mode.

4. The speed-changing device according to claim 2, wherein

the first variator includes a fluid-pressure pump, and
the second variator includes a fluid-pressure motor, wherein the fluid-pressure pump and the fluid-pressure motor are connected by a pair of main pipelines, the pair of main pipelines carrying out power transmission between the fluid-pressure pump and the fluid-pressure motor, further comprising:

a relief valve disposed between the pair of main pipelines to control a state between the pair of main pipelines to be a communicating state and a blocking state,
the controller changes a communication start pressure of the relief valve, and
the controller decreases a setting value of the communication start pressure of the relief valve prior to start of the switch of the second output clutch and start of the switch of the first output clutch at the switching from the reverse rotation mode to the forward rotation mode.

5. The speed-changing device according to claim 1, wherein

the first variator includes a fluid-pressure pump, and
the second variator includes a fluid-pressure motor, wherein the fluid-pressure pump and the fluid-pressure motor are connected by a pair of main pipelines, the pair of main pipelines carrying out power transmission between the fluid-pressure pump and the fluid-pressure motor, further comprising:

a relief valve disposed between the pair of main pipelines to control a state between the pair of main pipelines to be a communicating state and a blocking state,
the controller changes a communication start pressure of the relief valve, and
the controller increases a setting value of the communication start pressure of the relief valve in the middle of performing the switch from the engagement to the disengagement of the first output clutch and the switch from the disengagement to the engagement of the second output clutch at the switching from the forward rotation mode to the reverse rotation mode.

6. The speed-changing device according to claim 2, wherein

the first variator includes a fluid-pressure pump, and
the second variator includes a fluid-pressure motor, wherein the fluid-pressure pump and the fluid-pressure motor are connected by a pair of main pipelines, the pair of main pipelines carrying out power transmission between the fluid-pressure pump and the fluid-pressure motor, further comprising:

a relief valve disposed between the pair of main pipelines to control a state between the pair of main pipelines to be a communicating state and a blocking state,
the controller changes a communication start pressure of the relief valve, and
the controller increases a setting value of the communication start pressure of the relief valve in the middle of performing the switch from the engagement to the disengagement of the second output clutch and the switch from the disengagement to the engagement of the first output clutch at the switching from the reverse rotation mode to the forward rotation mode.

7. The speed-changing device according to claim 1, wherein

the first variator includes a fluid-pressure pump, and
the second variator includes a fluid-pressure motor, wherein the fluid-pressure pump and the fluid-pressure motor are connected by a pair of main pipelines, the pair of main pipelines carrying out power transmission between the fluid-pressure pump and the fluid-pressure motor, further comprising:

a relief valve disposed between the pair of main pipelines to control a state between the pair of main pipelines to be a communicating state and a blocking state,
the controller changes a communication start pressure of the relief valve, and
the controller creates time for which the relief valve is communicating during the time the rotation direction of the third member is reversed by changing the rotation speed of the first variator at the switching from the forward rotation mode to the reverse rotation mode.

8. The speed-changing device according to claim 2, wherein

the first variator includes a fluid-pressure pump, and
the second variator includes a fluid-pressure motor, wherein the fluid-pressure pump and the fluid-pressure motor are connected by a pair of main pipelines, the pair of main pipelines carrying out power transmission between the fluid-pressure pump and the fluid-pressure motor, further comprising:

a relief valve disposed between the pair of main pipelines to control a state between the pair of main pipelines to be a communicating state and a blocking state,
the controller changes a communication start pressure of the relief valve, and
the controller creates time for which the relief valve is communicating during the time the rotation direction of the third member is reversed by changing the rotation speed of the first variator at the switching from the reverse rotation mode to the forward rotation mode.

9. The speed-changing device according to claim 1, wherein

the first variator and the second variator each include an electric machine, and
the first variator and the second variator are connected by an electrical line, further comprising:
an electric machine control device disposed in the electrical line, wherein the first variator and the second variator carry out power transmission therebetween via the electrical line.

10. The speed-changing device according to claim 2, wherein

the first variator and the second variator each include an electric machine, and
the first variator and the second variator are connected by an electrical line, further comprising:
an electric machine control device disposed in the electrical line, wherein the first variator and the second variator carry out power transmission therebetween via the electrical line.

Fig.1

Fig.2

21

22

23B

23A

Fig.3

EP 4 782 725 A1

Fig.4

CONTROLLER

21 24 25 31 36 33 35 38 34 37 39 28A 28C 32 28 26 61 68 65 78 79 63 77 74 62 66 69 70 67 64 76 75 71 73 72 23(23A, 23B) (B)

10 10A 10B 9 27A 27 27B 27B1 27C 22 30 28B 29 29E 29D 29B 29A 29C (A)

Fig.5

Fig.6

Fig.7

EP 4 782 725 A1

Fig.8

Fig.9

ROTATION SPEED OF SECOND SUN GEAR
/ROTATION SPEED OF CARRIER

$Y_1$

(1, 1)

ROTATION SPEED OF FIRST SUN GEAR
/ROTATION SPEED OF CARRIER

Fig.10

EP 4 782 725 A1

Fig.11

Fig.12

Fig.13

CONTROLLER

Fig.14

Fig.15

Fig.16

EP 4 782 725 A1

Fig.17

CLUTCH PRESSUR

PRESSURE OF FORWARD ONE-SPEED CLUTCH 69    PRESSURE OF BACKWARD ONE-SPEED CLUTCH 70    F→R

TIME

A    D    E    F    I

ROTATION SPEED

ROTATION SPEED OF FIRST VARIATOR 33
ROTATION SPEED OF OUTPUT SHAFT 23
H
A    G    J
TIME
ROTATION SPEED OF SECOND VARITATOR 34

PRESSURE (FIRST MAIN PIPELINE 35A)

101    SETTING PRESSURE OF FIRST VARIABLE RELIEF VALVE 38A
N
H    J    PRESSURE OF FIRST MAIN PIPELINE 35A
A    B    C    TIME
C1    C2    G    SETTING PRESSURE OF SECOND    L    PRESSURE OF SECIND MAIN PIPELINE 35B
VARIABLE RELIEF VALVE 38B    M

(SECOND MAIN PIPELINE 35B) PRESSURE

FLOW AMOUNT

FLOW AMOUNT OF HYDRAULIC PUMP
(FIRST VARIATOR 33＝FIRST HYDRAULIC PUMP AND MOTOR 33)
K
A    G    J    TIME
H    FLOW AMOUNT OF HYDRAULIC MOTOR
(SECOND VARIATOR 34＝SECOND HYDRAULIC PUMP AND MOTOR 34)

OUTPUT TORQUE
0
A    TIME
G    TORQUE OF OUTPUT SHAFT 23
C1    H    CAPACITY OF HYDRAULIC MOTOR
(SECOND VARIATOR 34＝SECOND HYDRAULIC PUMP AND MOTOR 34)

CAPACITY

(FIRST VARIATOR 33＝FIRST HYDRAULIC PUM AND MOTOR 33)
CAPACITY OF HYDRAULIC MOTOR
A    G    J    Fig.18
0    TIME

EP 4 782 725 A1

CLUTCH PRESSUR

PRESSURE OF BACKWARD ONE-SPEED CLUTCH 70  PRESSURE OF FORWARD ONE-SPEED CLUTCH 69  R→F

O  A  D  E  F  I  TIME

ROTATION SPEED

ROTATION SPEED OF FIRST VARIATOR 33

ROTATION SPEED OF SECOND VARITATOR 34

O  A  H  G  J  TIME

ROTATION SPEED OF OUTPUT SHAFT 23

PRESSURE (FIRST MAIN PIPELINE 35A)

101  SETTING PRESSURE OF FIRST VARIABLE RELIEF VALVE 38A  N

O  A  B  C  H  J  TIME

PRESSURE OF FIRST MAIN PIPELINE 35A

(SECOND MAIN PIPELINE 35B PRESSURE)  C1  C2  G  L  M  PRESSURE OF SECIND MAIN PIPELINE 35B

ROTATION SPEED OF SECOND VARITATOR 38B

FLOW AMOUNT OF HYDRAULIC PUMP

FLOW AMOUNT  (FIRST VARIATOR 33=FIRST HYDRAULIC PUMP AND MOTOR 33)

O  A  G  J  K  TIME

H

FLOW AMOUNT OF HYDRAULIC MOTOR (SECOND VARIATOR 34=SECOND HYDRAULIC PUMP AND MOTOR 34)

OUTPUT TORQUE  C'  H

G

TORQUE OF OUTPUT SHAFT 32

O  A  TIME

CAPACITY OF HYDRAULIC MOTOR (SECOND VARIATOR 34=SECOND HYDRAULIC PUMP AND MOTOR 34)

CAPACITY

(FIRST VARIATOR 33=FIRST HYDRAULIC PUM AND MOTOR 33) CAPACITY OF HYDRAULIC MOTOR

A  G  J

O  TIME

Fig.19

EP 4 782 725 A1

52

Fig.20

Fig.21

Fig.22

Fig.23

ROTATION SPEED OF SUN GEAR
/ROTATION SPEED OF CARRIER

ROTATION SPEED OF RING GEAR
/ROTATION SPEED OF CARRIER

$Y_2$

(1, 1)

Fig.24

Fig.25

## INTERNATIONAL SEARCH REPORT

| International application No. |
| --- |
| **PCT/JP2024/032750** |

### A. CLASSIFICATION OF SUBJECT MATTER

*F16H 61/44*(2006.01)i; *F16H 47/04*(2006.01)i; *F16H 61/02*(2006.01)i; *F16H 61/66*(2006.01)i

FI: F16H61/44; F16H61/66; F16H61/02; F16H47/04 D

According to International Patent Classification (IPC) or to both national classification and IPC

### B. FIELDS SEARCHED

Minimum documentation searched (classification system followed by classification symbols)

F16H61/44; F16H47/04; F16H61/02; F16H61/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2001-317611 A (ISHIKAWAJIMA SHIBAURA MACH CO., LTD.) 16 November 2001 (2001-11-16) entire text, all drawings | 1-10 |
| A | WO 2006/027983 A1 (KOMATSU LTD.) 16 March 2006 (2006-03-16) entire text, all drawings | 1-10 |
| A | WO 2022/070261 A1 (HITACHI CONSTRUCTION MACHINERY CO., LTD.) 07 April 2022 (2022-04-07) entire text, all drawings | 1-10 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **19 November 2024** | **03 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/032750**

| Patent document cited in search report | | | Publication date (day/month/year) | Patent family member(s) | | Publication date (day/month/year) |
|---|---|---|---|---|---|---|
| JP | 2001-317611 | A | 16 November 2001 | (Family: none) | | |
| WO | 2006/027983 | A1 | 16 March 2006 | US 2008/0096712 A1 entire text, all drawings | | |
| | | | | EP 1798447 A1 | | |
| | | | | CN 101010527 A | | |
| | | | | KR 10-2007-0051300 A | | |
| WO | 2022/070261 | A1 | 07 April 2022 | US 2023/0147860 A1 entire text, all drawings | | |
| | | | | EP 4224036 A1 | | |
| | | | | KR 10-2022-0108822 A | | |
| | | | | CN 114981568 A | | |

Form PCT/ISA/210 (patent family annex) (July 2022)

**REFERENCES CITED IN THE DESCRIPTION**

**Patent documents cited in the description**

- JP 2008247269 A

- JP 5095252 B